# EUROPÄISCHE PATENTSCHRIFT

(11) **EP 0 928 302 B1**
(45) Veröffentlichungstag und Bekanntmachung des Hinweises auf die Patenterteilung: **27.03.2002**
(21) Anmeldenummer: 97943904.9
(22) Anmeldetag: 25.09.1997
(51) Int. Cl.: C08F 285/00, C08L 51/00, C08F 212/04, C08F 265/04, C08F 257/02

(54) **NEUE POLYMERZUSAMMENSETZUNGEN UND AUS DIESEN GEBILDETE PFROPFCOPOLYMERE SOWIE THERMOPLASTISCHE MASSEN MIT VERNETZERGRADIENTEN**
NEW POLYMER COMPOSITIONS, GRAFT COPOLYMERS AND THERMOPLASTIC COMPOUNDS WITH CROSS-LINKING GRADIENTS MADE OF SUCH COMPOSITIONS
NOUVELLES COMPOSITIONS POLYMERES, ET COPOLYMERES GREFFES ET MATERIAUX THERMOPLASTIQUES OBTENUS A PARTIR DESDITES COMPOSITIONS, A GRADIENTS DE RETICULATION

(30) Priorität: 25.09.1996 DE 19639360
(43) Veröffentlichungstag der Anmeldung: 14.07.1999
(73) Patentinhaber: BASF AKTIENGESELLSCHAFT, 67056 Ludwigshafen (DE)
(72) Erfinder: FISCHER, Michael, D-67071 Ludwigshafen (DE); MC KEE, Graham, Edmund, D-67433 Neustadt (DE)
(74) Vertreter: Isenbruck, Günter, Dr.
(86) Internationale Anmeldenummer: EP9705274
(87) Internationale Veröffentlichungsnummer: WO9813403

(56) Entgegenhaltungen:
- EP-A- 0 030 999
- EP-A- 0 548 762
- DE-A- 2 244 519
- DE-A- 4 132 497
- DE-A- 19 523 080
- PATENT ABSTRACTS OF JAPAN vol. 002, no. 059 (C-012), 27.April 1978 & JP 53 018661 A (MITSUBISHI RAYON CO LTD), 21.Februar 1978,

## Beschreibung

Die Erfindung betrifft ein Hartsegment H1 mit einer Glastemperatur von mindestens 10°C, enthaltend polymerisiert mindestens ein vinylaromatisches Monomer als Monomer oder als eines von zwei oder mehreren miteinander copolymerisierbaren Monomeren sowie mindestens einen Vernetzer mit zwei oder mehr funktionellen Gruppen unterschiedlicher Reaktivität und mindestens einen Vernetzer mit zwei oder mehr funktionellen Gruppen gleicher Reaktivität, wobei die Konzentration mindestens eines Vernetzers im Hartsegment variiert.

Weiterhin betrifft die vorliegende Erfindung ein Verfahren zur Herstellung dieser Segmente sowie Pfropfcopolymerisate, die diese Segmente beinhalten, Verfahren zur Herstellung dieser Pfropfcopolymerisate und thermoplastische Massen, die diese Pfropfcopolymerisate beinhalten. Zudem betrifft die Erfindung Formkörper, Folien, Fasern und Beschichtungen, die mindestens eines der erfindungsgemäßen Segmente, Pfropfcopolymerisate und thermoplastischen Massen beinhalten oder verwenden.

Pfropfcopolymerisate, die häufig auch als "Kern-Schale"-Teilchen bezeichnet werden, sind beispielsweise als Schlagzähmodifier für Kunststoffe wie Styrol-Acrylnitril-Copolymere, Polyvinylchlorid (PVC), Polymethylmethacrylat oder Polycarbonat bekannt. Sie können zwei oder mehrstufig aufgebaut sein.

Die Pfropfgrundlage, der "Kern", kann aus elastomerem "weichem" Segment, d.h. solchem mit Glasübergangstemperaturen von weniger als ca. 24°C, z.B. weniger als 0°C, oder nicht elastomeren, "hartem" Segment, d.h. solchem mit Glasübergangstemperaturen von mehr als etwa 25°C, z.B. mehr als 50°C, bestehen. Die Pfropfauflage, "Schale" oder "Hülle", kann entsprechend hart bzw. weich oder im Fall von mehrstufigen Pfropfcopolymerisaten abwechselnd hart oder weich bzw. weich oder hart sein.

Die Glastemperatur der einzelnen Stufen kann jeweils durch die Wahl der Monomeren und zusätzlich durch Zugabe eines oder mehrerer Vernetzer beeinflußt werden. Vernetzend wirken z.B. Monomere, die zwei oder mehr funktionelle Gruppen aufweisen, die mit den die Pfropfgrundlage oder auflage aufbauenden Monomeren reagieren können. Reagieren alle funktionellen Gruppen des polyfunktionellen Monomeren gleichschnell ab, so wirken diese Monomere nur vernetzend. Enthalten die Vernetzer jedoch funktionelle Gruppen unterschiedlicher Reaktivität, so können die nicht abreagierten funktionellen Gruppen als Pfropfstellen, beispielsweise fiir die Anbindung einer Pfropfauflage an die Pfropfgrundlage dienen. Derartige Vernetzer wirken also nicht nur vernetzend sondern auch pfropfaktiv.

Für welche Zwecke Pfropfcopolymerisate eingesetzt werden können, wie sie beispielsweise optische Qualität, Einfärbbarkeit, Witterungsstabilität oder Schlagrißbildung sowie Spannungsrißkorrosion in Formmassen beeinflussen, hängt von deren Aufbau aber auch von deren Größe und Morphologie ab.

Bislang war es nicht möglich, Pfropfcopolymerisate (z.B. solche aufgebaut aus einem Polystyrolkern, einer ersten Schale aus Polybutylacrylat und einer zweiten Schale aus Styrol-Acrylnitril-Copolymeren) großer Teilchengröße mit wirklicher Kern-Schale-Struktur herzustellen, wenn Kern- und Schalenmaterialien miteinander unverträglich waren (siehe z.B. H.Okubo, Makromol. Chem., Macromol. Symp.35/36 (1990) 307-325). Ab bestimmten Teilchendurchmessern der Pfropfgrundlage (ab ca. 100 bis 150 nm und Gesamtteilchengrößen ab ca. 200 nm) zeigt sich nämlich bei derartigen Pfropfcopolymerisaten, daß Pfropfgrundlage und -auflage keine definierte Kern-Schale-Struktur bilden. Dabei ist der Kern nicht vollständig und im wesentlichen konzentrisch von der Pfropfauflage umhüllt. Die Pfropfgrundlage und -auflage sind teilweise vermischt oder das Kernmaterial bildet zum Teil die äußere Phasengrenze des "Kern-Schale"-Teilchens. Hierdurch entsteht eine himbeerartige Morphologie. Weiterhin wird darin ein Copolymer aus einem Weichsegment bzw. einem Hartsegment, nämlich Polybutylacrylat bzw. Polystyrol, offenbart, worin das Weichsegment als Matrix und das Hartsegment als Domänen vorliegen, ohne daß sich eine definierte Kern-Schale-Morphologie ausbildet.

Deshalb weisen die bislang bekannten Pfropfcopolymerisate mit definierter Kern-Schale-Struktur, deren Kern- und Schalenmaterialien miteinander unverträglich sind, nur kleine bzw. im Verhältnis zur Gesamtgröße der Pfropfcopolymerisate nur kleine Kerndurchmesser auf oder sie enthalten eine Pfropfgrundlage aus Material, das mit dem der Pfropfauflage verträglich ist.

Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der makromolekularen Chemie, Band IV, S. 222 ff, E. Vollmert-Verlag 1979). Zwei Polymere sind umso besser verträglich, je geringer die Differenz ihrer Löslichkeitsparameter ist. Derartige Parameter sowie die Mischungsenthalpie sind nicht einheitlich fiir alle Polymeren bestimmbar, so daß die Löslichkeit nur indirekt, z.B. durch Torsions-Schwingungs- oder Differential-Thermo-Analyse-Messungen (DTA) bestimmbar ist.

Beispiele für miteinander mischbare, also verträgliche, Polymere sind in verschiedenen Monographien (z.B. J.Brandrup, E.H. Immergut: Polymer Handbook, 3rd Edition, 1989) ausführlich dokumentiert.

So war der US-A-4 108 946 eine Pfropfgrundlage mit einer Teilchengröße bis 240 nm aus vernetzten Monomerengemischen aus Styrol/Acrylnitril oder Styrol/Acrylnitril/Methylmethacrylat zu entnehmen, die mit einer Pfropfauflage aus Acrylestern versehen ist. Reines Polystyrol als Pfropfgrundlage wird als nicht wünschenswert bezeichnet.

Aus der DE-A-33 00 526 waren Pfropfcopolymerisate bekannt, die jeweils aus einem nichtelastischen Kern mit Durchmessern bis 500 nm, bevorzugt bis 200 nm, und einer vernetzten Acrylesterhülle aufgebaut sind. Für das Monomermaterial des Kerns wird bevorzugt überwiegend Methylmethacrylat eingesetzt.

Ebenso waren in der US-A-3 793 402 Pfropfcopolymerisate offenbart, deren Pfropfgrundlagen vernetzt sind. Als Vernetzer für Pfropfgrundlagen, die bevorzugt aus Styrol oder substituierten Styrolen bestehen, werden Polyvinylbenzole wie Divinyl- oder Trivinylbenzol beschrieben, jedoch die erfindungsgemäßen, vorteilhaften Vernetzerkombinationen nicht eingesetzt.

Darüber hinaus waren der DE-A-22 44 519 Pfropfcopolymerisate zu entnehmen, die je eine Pfropfgrundlage auf der Basis vinylaromatischer Verbindungen und bis zu 10 Gew.-% vernetzender Monomerer enthalten. Ferner waren in der DE-A-41 32 497 Pfropfcopolymerisate veröffentlicht, deren Pfropfgrundlagen überwiegend aus vinylaromatischen Monomeren aufgebaut sind und die vernetzend als auch pfropfaktiv wirkende Vernetzer enthalten können. Nach dem dort beschriebenen Verfahren können entweder Pfropfcopolymerisate erhalten werden, die kleine Kerne (bis ca. 150 nm) enthalten, oder solche, die keine definierte Kern-Schale-Morphologie aufweisen.

Um zu schlagzähen, thermoplastischen Massen zu gelangen, gibt man Pfropfkautschuke zu den bei Raumtemperatur spröden, die Matrix bildenden Polymerisaten. Die Herstellung solcher Schlagzähmodifizierer ist seit langem bekannt und beispielsweise in DE-A-12 60 135, DE-A-23 11 129 und DE-A-28 26 925 beschrieben. Besteht die Matrix aus Polystyrol oder Styrolcopolymeren, so läßt sich beobachten, daß die Wirksamkeit der Pfropfcopolymerisate bezüglich ihrer schlagzähmodifizierenden Wirkung mit zunehmender Größe der Pfropfcopolymerisate zunimmt. Bei Einsatz von kleinteiligen Pfropfkautschuken besteht gleichzeitig das Problem, daß die Zähigkeit der schlagzähmodifizierenden Massen stark von der Verarbeitungstemperatur abhängt.

Massen mit verbesserter Schlagzähigkeit bei gleichbleibend guter Einfärbbarkeit können durch Zumischen einer großteiligen zu einer kleinteiligen Kautschukkomponente (bimodale Kautschukteilchen) erhalten werden, wie in der DE-A-28 26 925 beschrieben. Oftmals reicht die dort erzielte Schlagzähigkeit, insbesondere die Tieftemperaturschlagzähigkeit, der Massen für hohe Beanspruchung nicht aus. Zudem kann die Schlagzähigkeit nicht durch beliebige Zugabe der großteiligen Kautschukmenge erhöht werden, da sonst die Einfärbbarkeit deutlich verschlechtert wird.

Aufgabe der vorliegenden Erfindung war es, Kunststoffe, insbesondere thermoplastische Massen zur Verfügung zu stellen, die vor allem bei tiefen Temperaturen, beispielsweise unter 0°C, bevorzugt unabhängig von der Verarbeitungstemperatur, bessere Schlagzähigkeit, Spannungsrißkorrosion und insbesondere bessere multiaxiale Zähigkeiten aufweisen und sich leichter einfärben lassen sowie widerstandsfähigere Oberflächen aufweisen, und deren Oberflächenbeschaffenheit, insbesondere Glanz und Mattheit, sich leicht einstellen lassen.

In diesem Zusammenhang war es eine weitere erfindungsgemäße Aufgabe, Pfropfcopolymerisate zur Verfügung zu stellen, bei denen sich die Teilchengröße und ein definierter Phasenübergang einstellen läßt, wobei der Einstellung von kleinen Teilchen (< 200 nm) und großen Teilchen (≥ 200 nm) bei definierten Phasenübergängen besondere Bedeutung zukommt, wobei große Teilchen besonders bevorzugt sind.

Der vorliegenden Erfindung lag ferner die Aufgabe zugrunde, witterungsbeständige Produkte auf Basis von Acrylnitril-Styrol-Acrylestern(ASA)-Polymerisaten, insbesondere solche mit einer Polystyrol-co-Acrylnitril-Matrix, zu schaffen, welche neben den günstigen Eigenschaften der bekannten Massen, wie Witterungs- und Alterungsbeständigkeit, eine sehr gute Zähigkeit bei guter Einfärbbarkeit sowie eine Unabhängigkeit der Zähigkeit von den Verarbeitungstemperaturen aufweisen.

Diese Aufgaben werden überraschend durch das eingangs definierte Hartsegement sowie durch die erfindungsgemäßen Pfropfcopolymerisate und thermoplastischen Massen gelöst.

Die Hartsegmente werden mit "H" bezeichnet. Die auf H folgende Zahl numeriert die Hartsegmente fortlaufend durch. Die auf diese Zahl folgende Numerierung bezeichnet die Monomere bzw. Vernetzer bzw. Vernetzerkomponenten, die in dem Hartsegment verwendet werden. Die Pfropfcopolymerisate werden mit "P" bezeichnet. Die auf P folgende Zahl numeriert die Pfropfcopolymerisate fortlaufend durch. Folgt auf diese Zahl ein "'", so besitzt das Pfropfcopolymerisat ein Weichsegment als Pfropfgrundlage; folgt auf die Zahl """, so weist das auf diese Weise bezeichnete Pfropfcopolymerisat ein Hartsegment als Pfropfgrundlage auf. Die darauffolgende Zahl numeriert die Segmente durch, die das Pfropfcopolymerisat beinhaltet. Bei bevorzugten erfindungsgemäßen Pfropfcopolymerisaten, bei denen die Reihenfolge der aufeinander folgenden Segmente nicht beliebig ist, sondern feststeht, bezeichnet die Zahl 1, die Pfropfgrundlage und die Zahlen 2, 3 usw. die auf die Pfropfgrundlage folgende Pfropfauflagen in ihrer Abfolge. Die dritte auf P folgende Zahl bezeichnet die von dem Segment beinhalteten Monomere, Vernetzer oder Vernetzerkomponenten. "T" bezeichnet die erfindungsgemäßen thermoplastischen Massen. Die auf T folgende Zahl numeriert die thermoplatischen Massen fortlaufend durch. Die in Kleinbuchstaben beschriebenen römischen Zahlen bezeichnen die von den Massen beinhalteten Bestandteile.

Das erfindungsgemäße Hartsegment H1 weist vorzugsweise eines oder mehrere der folgenden Merkmale auf:
a) daß die Konzentration von mindestens einem Vernetzer mit zwei oder mehr funktionellen Gruppen unterschiedlicher Reaktivität, vorzugsweise Dihydrodicyclopentadienylacrylat, vom Inneren zum Äußeren des Hartsegments H1 variiert, jedoch vorzugsweise zunimmt;
b) eine Glastemperatur von mindestens 25 °C aufweist;
c) mindestens beinhaltet
   H1.1) 50 bis 99,8 Gew.-% mindestens eines vinylaromatischen Monomeren,
   H1.2) 0 bis 49,8 Gew.-% mindestens eines mit dem Monomeren H1.1 copolymerisierbaren Monomeren,
   H1.3) 0,1 bis 25 Gew.-% einer Vernetzerkomponente aus
      α) 0,1 bis 100 Gew.-% Dihydrodicyclopentadienylacrylat
      β) 0 bis 99,9 Gew.-% mindestens eines weiteren Vernetzers mit zwei oder mehr funktionellen Gruppen unterschiedlicher Reaktivität,
      wobei die Summe der Gewichtsprozente aus α und β 100 ergibt, und
   H1.4) 0,1 bis 25 Gew.-% mindestens eines Vernetzers mit zwei oder mehr funktionellen Gruppen gleicher Reaktivität, wobei die Summe der Gewichtsprozente von H1.1 bis H1.4 100 ergibt.

Die erfindungsgemäßen Hartsegmente H1 mit einer Glastemperatur von mindestens 10°C, bevorzugt mindestens 25°C enthalten mindestens ein vinylaromatisches Monomer als Monomer oder als eines von zwei oder mehr miteinander copolymerisierbaren Monomeren sowie mindestens einen Vernetzer mit zwei oder mehr funktionellen Gruppen unterschiedlicher Reaktivität und mindestens einen Vernetzer mit zwei oder mehr funktionellen Gruppen gleicher Reaktivität beinhaltet, wobei die Konzentration mindestens eines Vernetzers im Hartsegment H1 variiert. In einer besonder bevorzugten Ausführungsform des erfindungsgemäßen Hartsegments H1 variiert vorzugsweise die Konzentration des Vernetzers mit funktionellen Gruppen unterschiedlicher Reaktivität. In einer weiteren erfindungsgemäßen Ausführungsform des Hartsegments H1 variiert jedoch vorzugsweise der Vernetzer mit zwei oder mehr funktionellen Gruppen gleicher Reaktivität. Es kann jedoch gleichfalls bevorzugt sein, daß sowohl die Konzentration des Vernetzers mit funktionellen Gruppen unterschiedlicher Reaktivität als auch die Konzentration des Vernetzers mit funktionellen Gruppen gleicher Reaktivität in dem erfindungsgemäßen Hartsegment H1 variieren.

Ferner ist es erfindungsgemäß besonders bevorzugt, daß die Konzentration von mindestens einem Vernetzer mit zwei oder mehr funktionellen Gruppen unterschiedlicher Reaktivität vom Inneren zum Äußeren des Hartsegments zunimmt. Diese geht vorzugsweise mit der Abnahme der Konzentration mindestens eines Vernetzer mit zwei oder mehr funktionellen Gruppen gleicher Reaktivität vom Inneren zum Äußeren des Hartsegments H1 einher.

Das Hartsegment H1, insbesondere wenn es in einem Pfropfcopolymerisat verwendet wird, weist vorzugsweise für den Fall, daß es als Pfropfgrundlage verwendet wird, eine im wesentlichen kugelförmige Gestaltung auf. Für den Fall, daß das Hartsegment H1 als Pfropfauflage verwendet wird, liegt es vorzugsweise in einer im wesentlichen schalenförmigen Gestaltung vor. Es kann jedoch erfindungsgemäB gleichfalls bevorzugt werden, daß das erfindungsgemäße Hartsegment H1 im wesentlichen die Form einer Schicht besitzt.

Für den Fall, daß das erfindungsgemäße Hartsegment H1 als im wesentlichen kugelförmige Pfropfgrundlage verwendet wird, ist es bevorzugt, daß die Konzentration von mindestens einem Vernetzer mit zwei oder mehr funktionellen Gruppen unterschiedlicher Reaktivität vom Inneren zum Äußeren des im wesentlichen kugelförmigen Hartsegments zunimmt.

Für den Fall, daß das erfindungsgemäße Hartsegment H1 als im wesentlichen schicht- oder vorzugsweise schalenförmige Pfropfauflage verwendet wird, ist es bevorzugt, daß die Konzentration von mindestens einem Vernetzer mit zwei oder mehr funktionellen Gruppen unterschiedlicher Reaktivität von der inneren zur äußeren Fläche des im wesentlichen schalen- oder schichförmigen Hartsegments zunimmt.

Vorzugsweise kann erfindungsgemäß die Zugabemenge über den Zeitraum entweder von mindestens einem Vernetzer mit zwei oder mehr funktionellen Gruppen unterschiedlicher Reaktivität variert werden und die Zugabemenge mindestens einem Vernetzer mit zwei oder mehr funktionellen Gruppen gleicher Reaktivität über die Zugabezeit konstant bleiben, wenn ein solcher Vernetzer eingesetzt wird.

Es kann erfindungsgemäß bevorzugt sein, daß die Abnahme und/oder die Zunahme monoton und vorzugsweise streng monoton erfolgt. Vorzugsweise erfolgt die Zu- und/oder Abnahme linear, bevorzugt exponentiell. Weiterhin kann es erfindungsgemäß bevorzugt sein, daß die Zu- bzw. Abnahme stufenweise, beispielsweise treppenartig oder in Form eines Sägezahnmusters oder in Form eines Termes mit einer oder mehreren Unstetigkeiten oder in Form einer sinusartigen Wellenfunktion, erfolgt. Darüber hinaus kann es erfindungsgemäß besonders bevorzugt sein, wenn zwei oder mehrere der zuvor genannten Formen der Zu- bzw. Abnahme miteinander kombiniert werden.

Die Art und Weise, wie die Vernetzer in dem erfindungsgemäßen Hartsegment H1 vorliegen, hängt vorzugsweise von der Art der Zudosierung der Vernetzer ab. So ergibt sich beispielsweise bei einer monoton, bevorzugt streng monoton steigenden Vernetzerzugabe ein Hartsegment, in dem vom Inneren zum Äußeren die Konzentration des entsprechenden Vernetzers, vorzugsweise mit zwei oder mehr funktionellen Gruppen unterschiedlicher Reaktivität, gleichfalls monoton, bevorzugt streng monoton ansteigt.

Die erfindungsgemäßen Hartsegmente H1 besitzen vorzugsweise eine Glastemperatur von mindestens 10, bevorzugt mindestens 25 und besonders bevorzugt mindestens 50°C, wobei erfindungsgemäß insbesondere bevorzugt ist, wenn die Hartsegmente eine Glastemperatur von 80 bis 130°C aufweisen.

Die erfindungsgemäßen Hartsegmente H1 können eine mittlere Teilchengröße (d₅₀) von 40 bis 2000, bevorzugt von 50 bis 1000 und besonders bevorzugt von 60 bis 800 nm aufweisen, wenn das Hartsegment H1 als im wesentlichen kugel- beziehungsweise kernförmige Pfropfgrundlage verwendet wird. In einer besonders bevorzugten Ausführungsform, in der das Hartsegment H1 als im wesentlichen kernförmige Pfropfgrundlage verwendet wird, besitzt dieses eine mittlere Teilchengröße (d₅₀) von 150 bis 2000, insbesondere von 250 bis 1000 und besonders bevorzugt von 250 bis 800 nm. In einer anderen erfindungsgemäßen Ausführungsform besitzt das Hartsegment H1, wenn es als im wesentlichen kernförmige Pfropfgrundlage verwendet wird, eine mittlere Teilchengröße (d₅₀) von 40 bis 200, bevorzugt 50 bis 150 und besonders bevorzugt 60 bis 120 nm.

Bei der Angabe der mittleren Teilchengröße handelt es sich in allen Fällen um das Gewichtsmittel der Teilchengröße, wie sie mittels einer analytischen Ultrazentrifuge entsprechend der Methode von E. Scholtan und H. Lange, Kolloid-Z. und Z.-Polymere 250, 782-796 (1972) bestimmt werden. Die Ultrazentrifugenmessungen liefern die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe besitzen. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser besitzen, als der Durchmesser, der dem d₅₀-Wert entspricht. Ferner besitzen 50 Gew.-% der Teilchen einen größeren Durchmesser als der d₅₀-Wert.

Ein erfindungsgemäß bevorzugtes Hartsegment H1 beinhaltet
H1.1) 50 bis 99,8 Gew.-% mindestens eines vinylaromatischen Monomeren,
H1.2) 0 bis 49,8 Gew.-% mindestens eines mit dem Monomeren H1.1 copolymerisierbaren Monomeren,
H1.3) 0,1 bis 25 Gew.-% einer Vernetzerkomponente aus
   α) 0,1 bis 100 Gew.-% Dihydrodicyclopentadienylacrylat und
   β) 0 bis 99,9 Gew.-% mindestens eines weiteren Vernetzers mit zwei oder mehr funktionellen Gruppen unterschiedlicher Reaktivität, wobei die Summe der Gewichtsprozente aus α und β 100 ergibt, und
H1.4) 0,1 bis 25 Gew.-% mindestens eines Vernetzers mit zwei oder mehr funktionellen Gruppen gleicher Reaktivität, wobei die unter H1.3 beziehungsweise H1.4 aufgeführten Vernetzer in der zuvor beschriebenen Weise in Ihrer Konzentration variiert werden können.

Vorzugsweise werden die erfindungsgemäßen Hartsegmente H1 für Pfropfcopolymerisate verwendet.

Unter diesen Pfropfcopolymerisaten ist das erfindungsgemäße Pfropfcopolymerisat P1 bevorzugt, das in beliebiger Reihenfolge mindestens

ein Weichsegment mit einer Glastemperatur von höchstens 10°C, das mindestens ein Acrylat als Monomer oder als eines von zwei oder mehreren miteinander copolymerisierbaren Monomeren und mindestens einen Vernetzer, und ein Hartsegment H1 - wie zuvor beschrieben - beinhaltet.

Die nun folgenden Ausführungen gelten für erfindungsgemäße Hartsegmente im allgemeinen und insbesondere für das Hartsegment H1 sowie umgekehrt.

Eine bevorzugte Ausführungsform des Pfropfcopolymerisats P1 ist das Pfropfcopolymerisat P1'. Dieses beinhaltet das Weichsegment als Pfropfgrundlage P1'.1 und das Hartsegment H1 als Pfropfauflage P1'.2, wobei vorzugsweise die Konzentration mindestens eines Vernetzers im Weichsegment variiert.

Eine besonders bevorzugte Ausführungsform des Pfropfcopolymerisats P ist das Pfropfcopolymerisat P1", dieses beinhaltet das Hartsegment H1 als Pfropfgrundlage P1".1 und das Weichsegment als Pfropfauflage P1".2.

Eine weitere erfindungsgemäß bevorzugte Ausführungsform ist das Pfropfcopolymer P2. Dieses beinhaltet in einer Ausführungsform das Pfropfcopolymerisat P1 mit beliebiger Abfolge des Weichsegments und des Hartsegments.

In einer besonders bevorzugten Ausführungsform des Pfropfcopolymers P2 beinhaltet das Pfropfcopolymerisat P2' vorzugsweise das Weichsegment P1'.1 als Pfropfgrundlage P2'.1 und das Hartsegment P1'.2 als Pfropfauflage P2'.2.

In einer weiteren bevorzugten Ausführungsform des Pfropfcopolymerisats P2 beinhaltet das Pfropfcopolymerisat P2" vorzugsweise das Hartsegment P1".1 als Pfropfgrundlage P2".1 und das Weichsegment P1".2 als Pfropfauflage P2".2.

Darüber hinaus beinhalten die erfindungsgemäßen Pfropfcopolymerisate P2, P2' sowie P2" eine weitere Pfropfauflage in Form eines Weichsegments mit einer Glastemperatur von höchstens 10°C, das mindestens ein Acrylat als Monomer oder als eines von zwei oder mehr miteinander copolymerisierbaren Monomeren und mindestens einen Vernetzer beinhaltet (P2.3, P2'.3 sowie P2".3).

Erfindungsgemäß besonders bevorzugt ist ein Pfropfcopolymerisat P2' mit einem Weichsegment P2'.1, das dem Weichsegment P1'.1 entspricht und einem Hartsegment P2'.2, das dem Hartsegment P1'.2 beziehungsweise H1 entspricht und einem weiteren, zuvor beschriebenen Weichsegment P2'.3.

Die sich anschließenden Ausführungen für die erfindungsgemäßen Pfropfcopolymerisate P1 und P2 gelten insbesondere auch für deren bevorzugte Ausführungsformen P1' bzw. P1" und P2' bzw. P2".

In den erfindungsgemäßen Pfropfcopolymerisaten P1 oder P2 ist es bevorzugt, daß mindestens in den Hartsegmenten die Konzentration von mindestens einem Vernetzer variiert, wie zuvor bei der Beschreibung des Hartsegments H1 erörtert. Es kann erfindungsgemäß jedoch gleichfalls bevorzugt sein, daß in den anderen Segmenten der erfindungsgemäßen Pfropfcopolymerisate P1 und P2 zusätzlich zum Hartsegment die Konzentration mindestens eines Vernetzers variiert.

Für den Fall, daß die in den erfindungsgemäßen Pfropfcopolymerisaten P1 oder P2 enthaltenen Weichsegmente mindestens ein Vernetzer mit zwei oder mehr funktionellen Gruppen unterschiedlicher Reaktivität und mindestens ein Vernetzer mit zwei oder mehr funktionellen Gruppen gleicher Reaktivität enthalten , kann die Konzentration eines oder mehrerer dieser Vernetzer variieren, wie zum Hartsegment H1 ausgeführt.

Demgemäß kann es bevorzugt sein, daß im Fall des Pfropfcopolymerisats P1 sowohl mindestens ein Vernetzer des Weichsegments als auch mindestens ein Vernetzer des Hartsegments in ihrer Konzentration variieren. Im Fall des Pfropfcopolymerisats P2 kann sowohl mindestens ein Vernetzer in einem Weichsegment und dem Hartsegment variieren als auch mindestens ein Vernetzer in beiden Weichsegmenten und dem Hartsegment variieren.

Weiterhin ist es besonders bevorzugt, daß im Fall der Pfropfcopolymerisate P1' bzw. P2' sowohl in dem die Pfropfgrundlage bildenden Weichsegment als auch in dem die darauf folgende Pfropfauflage bildenden Hartsegment die Konzentration mindestens eines Vernetzers variiert wird, wobei im Weichsegment und im Hartsegment die Konzentrationen unterschiedlicher Vernetzer variiert werden können. Hierbei ist es erfindungsgemäß bevorzugt, daß die Konzentration mindestens eines Vernetzers mit zwei oder mehr Gruppen unterschiedlicher Reaktivität, der sowohl fiir das Weichsegment als auch für das Hartsegment übereinstimmt, zunimmt. Es ist hierbei erfindungsgemäß besonders bevorzugt, wenn es sich bei diesem Vernetzer um DCPA handelt.

Die einen bevorzugten erfindungsgemäßen Ausführungsformen der Hartsegmente H1 beinhalten vorzugsweise mindestens ein vinylaromatisches Monomer als Monomer oder als eines von zwei oder mehreren miteinander copolymerisierbaren Monomeren sowie mindestens Dihydrodicyclopentadienylacrylat als einen Vernetzer mit zwei oder mehr funktionellen Gruppen unterschiedlicher Reaktivität und mindestens Divinylbenzol als Vernetzer mit zwei oder mehr funktionellen Gruppen gleicher Reaktivität.

Weitere besonders bevorzugte Ausfihrungsformen der erfindungsgemäßen Hartsegmente H1 beinhalten vorzugsweise mindestens ein vinylaromatisches Monomer als Monomer oder als eines von mehreren miteinander copolymerisierbaren Monomeren sowie mindestens Dihydrodicyclopentadienylacrylat als einen Vernetzer mit zwei oder mehr funktionellen Gruppen unterschiedlicher Reaktivität und mindestens Butandioldiacrylat als Vernetzer mit zwei oder mehr funktionellen Gruppen gleicher Reaktivität.

Besonders bevorzugte Ausführungsformen der erfindungsgemäßen Hartsegmente H1 beinhalten vorzugsweise mindestens ein vinylaromatisches Monomer als Monomer oder als eines von zwei oder mehreren miteinander copolymerisierbaren Monomeren sowie Dihydrodicyclopentadienylacrylat, Divinylbenzol und/oder Butandioldiacrylat. Hartsegmente H1 sind vorzugsweise aufgebaut aus 50 bis 99,8, bevorzugt 60 bis 99, besonders bevorzugt 60 bis 98 Gew.-%, bezogen auf die Komponenten H1.1 bis H1.4, mindestens eines vinylaromatischen Monomers H1.1.

Erfindungsgemäße vinylaromatische Monomere vorzugsweise mit maximal 20 Kohlenstoffatomen sind beispielsweise Styrol, α-Methylstyrol oder kernalkylierte Styrole, wie p-Methylstyrol oder p-t-Butylstyrol, wobei Styrol, α-Methylstyrol oder p-Methylstyrol oder deren Mischungen bevorzugt und besonders bevorzugt Styrol verwendet wird.

Die erfindungsgemäßen Hartsegmente H1 können beispielsweise neben dem Monomeren H1.1 auch damit copolymerisierbare, vorzugsweise nichtvinylaromatische, Monomere H1.2 aufweisen.

Monomere H1.2 vorzugsweise mit maximal 20 Kohlenstoffatomen sind beispielsweise n-Butylacrylat, Acrylnitril, Methacrylnitril, Acrylsäure, Methacrylsäure, Methylmethacrylat, Glycidylmethacrylat, Maleinsäureanhydrid, tert.-Butylacrylat oder Vinylmethylether sowie deren Mischungen. Erfindungsgemäß bevorzugte Monomere H1.2 sind Acrylnitril, α-Methylstyrol und Methylmethacrylat. Der Anteil der Monomeren H1.2 beträgt 0 bis 49,8, bevorzugt 0 bis 39, besonders bevorzugt 0 bis 38 Gew.-%, bezogen auf die Komponenten H1.1 bis H1.4.

Weiterhin beinhalten die Hartsegmente H1 vorzugsweise eine Vernetzer-komponente H1.3 in einer Menge von 0,1 bis 25, bevorzugt 0,5 bis 10, besonders bevorzugt 1 bis 5 Gew.-%, bezogen auf die Komponenten H1.1 bis H1.4.

Die Vernetzerkomponente kann Dihydrodicyclopentadienylacrylat (α) der Formel Ia und Ib 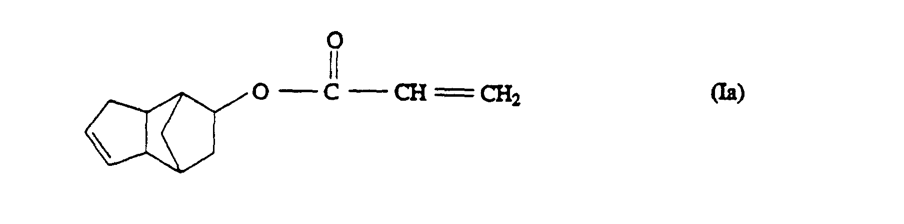 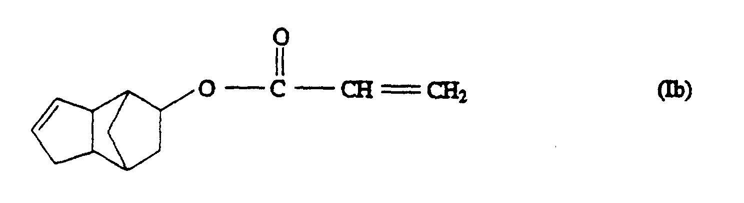 alleine oder in Kombination mit mindestens einem anderen Vernetzer mit runktionellen Gruppen unterschiedlicher Reaktivität (β) enthalten.

Erfindungsgemäß besteht die Vernetzerkomponente vorzugsweise aus 0,1 bis 100, bevorzugt 25 bis 100 und besonders bevorzugt 50 bis 100 Gew.-%, bezogen auf α und β, aus α sowie 0 bis 99,9, bevorzugt 0 bis 75, besonders bevorzugt 0 bis 50 Gew.-%, bezogen auf α und β, aus β.

Beispiele geeigneter Vernetzer β sind ethylenisch ungesättigte Monomere, die Epoxy-, Hydroxy-, Carboxyl-, Amino- oder Säureanhydridgruppen tragen. Hierzu zählen Hydroxyalkylacrylate oder Hydroxyalkylmethacrylate wie Hydroxy-C₁- bis C₁₀-alkylacrylate oder Hydroxy-C₁- bis C₁₀-alkylmethacrylate, insbesondere Hydroxyethylacrylat oder Hydroxy-n-propylacrylat. Vorzugsweise kommen Allylmethacrylat, Methallylmethacrylat, Acryloylalkoxysilane oder Methacryloylalkyloxysilane der allgemeinen Formel II 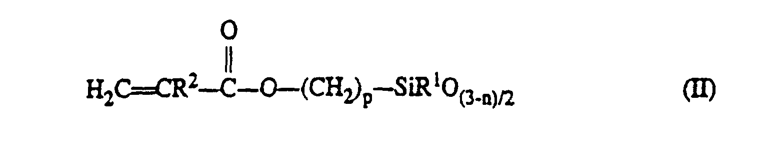 in Betracht, worin R¹ C₁- bis C₃- Alkyl oder Phenyl, bevorzugt Methyl bedeutet, R² Wasserstoff oder Methyl ist, n eine ganze Zahl von 0 bis 2 und p eine ganze Zahl von 1 bis 6, bevorzugt von 1 bis 4 darstellt. Als bevorzugte Beispiele seien genannt:
β-Methacryloyloxyethyldimethoxymethylsilan,
γ-Methacryloyloxy-n-propylmethoxydimethylsilan,
γ-Methacryloyloxy-n-propylmethoxymethylsilan,
γ-Mcthacryloyloxy-n-propyltrimethoxylsilan,
γ-Methacryloyloxy-n-propyldimethoxymethylsilan,
γ-Methacryloyloxy-n-propyldiethoxymethylsilan,
δ-Methacryloyloxy-n-butyldiethoxymethylsilan.

Zu den bevorzugten Mischungen der Vernetzer α und β zählen Dihydrodicyclopentadienylacrylat und Hydroxyethylacrylat; Dihydrodicyclopentadienylacrylat und Allylmethacrylat; Dihydrodicyclopentadienylacrylat, Hydroxyethylacrylat und Allylmethacrylat; Dihydrodicyclopentadienylacrylat, Allylmethacrylat und ß-Methacrylolyloxy-ethyldimethoxymethylsilan; Dihydroxydicyclopentadienylacrylat und β-Methacrylolyloxyethyldimethoxymethylsilan.

Ein erfindungsgemäßes Hartsegment H1 weist vorzugsweise als H1.4 0,1 bis 25, bevorzugt 0,5 bis 10 und besonders bevorzugt 1 bis 7 Gew.-%, bezogen auf die Komponenten H1.1 bis H1.4 mindestens Divinylbenzol, als Vernetzer mit zwei oder mehr funktionellen Gruppen gleicher Reaktivität, auf.

Ein weiteres erfindungsgemäßes Hartsegment H1 weist 0,1 bis 25, bevorzugt 0,5 bis 10 und besonders bevorzugt 1 bis 7 Gew.-%, bezogen auf die Komponenten H1.1 bis H1.4, mindestens Butandioldiacrylat, als Vernetzer mit zwei oder mehr funktionellen Gruppen gleicher Reaktivität auf.

Geeignete Vernetzer H1.4, die zusätzlich zu Divinylbenzol und/oder Butandioldiacrylat, jedoch auch für sich eingesetzt werden können, sind beispielsweise Mono-, Di-, Tri- oder Tetra-Alkylenglycoldiacrylate, bevorzugt C₁- bis C₄-Mono-alkylenglycoldiacrylate wie Ethylenglykoldiacrylat, n-Propylenglycoldiacrylat, 1,3-n-Butylenglycoldiacrylat oder 1,4-n-Butylenglycoldiacrylat. Ebenso kommen Mono-, Di-, Tri- oder Tetra-alkylenglykoldimethacrylate in Betracht, bevorzugt C₁- bis C₄-Mono-alkylenglykoldimethacrylate wie Ethylenglykoldimethacrylat, n-Propylenglycoldimethacrylat, 1,3-n-Butylenglycoldimethacrylat oder 1,4-n-Butylenglycoldimethacrylat. Acrylate oder Methacrylate von Glycerin, Trimethylolpropan, Pentaerythrit, Inosit oder ähnlicher Zukkeralkohole sind auch geeignete Vernetzer H1.4. Als weitere geeignete Vernetzer H1.4 sind Acryl- oder Methacrylamide von Ethylendiamin oder anderen aliphatischen Di- oder Polyaminen zu nennen. Darüber hinaus können Diallylmaleat, Diallylfumarat oder Diallylphthalat, Triacryl- oder Trimethacrylamide, Triallycyanurat oder Triallylisocyanurat sowie Trivinylbenzol als Vernetzer H1.4 verwendet werden.

Vorzugsweise weisen die Hartsegmente H1 50 bis 99,8 mindestens eines vinylaromatischen Monomeren (H1.1), 0 bis 49,8 Gew.-% mindestens eines mit den Monomeren H1.1 copolymerisierbaren Monomeren (H1.2), 0,1 bis 25 Gew.-% einer Vernetzerkomponente mit 0,1 bis 100 Gew.-% mindestens eines Vernetzers mit zwei oder mehr funktionellen Gruppen unterschiedlicher Reaktivität (H1.3) und 0,1 bis 25 Gew.-% Divinylbenzol und/oder Butandioldiacrylat, vorzugsweise Butandioldiacrylat, (H1.4) auf.

Darüber hinaus weist ein bevorzugtes erfindungsgemäßes Hartsegment H1 0,1 bis 25, bevorzugt 0,5 bis 10 und besonders bevorzugt 1 bis 7 Gew.-%, bezogen auf die Komponenten H1.1 bis H1.4, Divinylbenzol und/oder Butandioldiacrylat, vorzugsweise Butandioldiacrylat, auf.

Ein zusätzliches erfindungsgemäßes Hansegment H1 unterscheidet sich vorzugsweise von der vorangegangenen dahingehend, daß die Komponente H1.3 mindestens (α) 0,1 bis 100 Gew.-% Dihydrodicyclopentadienylacrylat und (β) 0 bis 99,9 Gew.-% mindestens eines weiteren Vernetzers mit zwei oder mehr funktionellen Gruppen unterschiedlicher Reaktivität aufweist.

In einem weiteren erfindungsgemäßen Hartsegment H1 wird vorzugsweise 0,1 bis 100, bevorzugt 25 bis 75 und besonders bevorzugt 50 bis 70 Gew.-% Dihydrodicyclopentadienylacrylat als Komponente H1.3 und als Komponente H1.4 0,1 bis 25, bevorzugt 0,5 bis 10 und besonders bevorzugt 1 bis 5 Gew.-% Divinylbenzol und/oder Butandioldiacrylat eingesetzt.

Die Summen der Gewichtsprozente von α und β sowie die Summen der Gewichtsprozente von H1.1 bis P.1.1.4 sollten jeweils 100 ergeben.

Die Wahl der Vernetzer richtet sich danach, welche Gestalt das Netzwerk des Hartsegments aufweisen soll. Ein kompaktes Netzwerk ergibt sich beispielsweise, wenn der vorangegangene Vernetzer α mit Divinylbenzol und/oder Butandioldiacrylat, vorzugsweise Butandioldiacrylat, verwendet wird, während ein relativ lockeres Netzwerk entsteht, wenn beispielsweise Vernetzer α zusammen mit Tetraethylenglycoldiacrylat oder -dimethylacrylat eingesetzt wird.

Zu den besonders bevorzugten Vernetzermischungen zählen Dihydrodicyclopentadienylacrylat und Butandioldiacrylat; Dihydrodicyclopentadienylacrylat und Divinylbenzol; Dihydrodicyclopentadienylacrylat und Ethylenglycoldiacrylat; sowie Dihydrodicyclopentadienylacrylat und Tetraethylenglycoldimethacrylat. Weitere bevorzugte Vernetzermischungen sind Dihydrodicyclopentadienylacrylat, Butandioldiacrylat und Allylmethacrylat; Dihydrodicyclopentadienylacrylat, Butandioldiacrylat und Hydroxyethylacrylat; Dihydrodicyclopentadienylacrylat, Butandioldiacrylat und Divinylbenzol; Dihydrodicyclopentadienylacrylat, Hydroxyethylacrylat und Divinylbenzol oder Diethylenglycoldiacrylat oder Tetraethylenglycoldimethacrylat; Dihydrodicyclopentadienylacrylat, Hydroxyethylacrylat, Allylmethacrylat und Divinylbenzol oder Diethylenglycoldiacrylat oder Tetraethylenglycoldimethacrylat; Dihydrodicyclopentadienylacrylat, Allylmethacrylat, β-Methacryloyloxyethyldimethoxymethylsilan und Divinylbenzol oder Diethylenglycoldiacrylat oder Tetraethylenglycoldimethacrylat; Dihydroxydicyclopentadienylacrylat, β-Methacrylo yloxyethyldimethoxymethylsilan und Divinylbenzol oder Diethylenglycoldiacrylat oder Tetraethylenglycoldimethacrylat.

Andere erfindungsgemäße Hartsegmente H1 enthalten vorzugsweise H1.4 in Mengen von 0,5 bis 5 Gew.-%, bezogen auf die Komponenten H1.1 bis H1.4. Prinzipiell können die Komponenten H1.3 und H1.4 in jedem Verhältnis zueinander stehen. Bevorzugte Hartsegmente H1 enthalten jedoch die Komponenten H1.3 und H1.4 in einem Verhältnis von 1:0,5 bis 1:3. Der Anteil der Komponente H1.4 kann jedoch gleichfalls darunter liegen und beispielsweise 1:0,3 betragen. Gleichfalls kommen höhere Anteile an H1.4 in Betracht, beispielsweise von H1.3 zu H1.4 bis zu 1:10, wobei die Verhältnisse von H1.3 zu H1.4 bevorzugt von 1:0,5 bis 1:3 oder 1:1 bis 1:3, insbesondere von 1:0,5 bis 1:2 und besonders bevorzugt von 1:0,75 bis 1:1 betragen.

Das erfindungsgemäße Hartsegment H1 wird hergestellt, indem die Variation der Konzentration mindestens eines Vernetzers durch Zudosierung des mindestens einen Vernetzers erfolgt, wobei besonders bevorzugt ist, daß die Variation, vorzugsweise Zunahme, mindestens eines Vernetzers mit zwei oder mehr fünktionellen Gruppen unterschiedlicher Reaktivität, vorzugsweise Dihydrodicyclopentadienylacrylat, durch Zudosierung des mindestens einen Vernetzers erfolgt.

Das erfindungsgemäße Hartsegment H1 wird vorzugsweise hergestellt, indem die zudosierte Menge mindestens eines Vernetzers über den Dosierzeitraum variiert wird.

Der Dosierzeitraum ist der Zeitabschnitt, der durch Beginn und Ende der Zugabe mindestens eines Monomeren - im Fall des Hartsegments mindestens eines vinylaromatischen Monomeren als Monomer oder als eines von zwei oder mehr miteinander copolymerisierbaren Monomeren und im Fall des Weichsegments mindestens eines Acrylats als Monomer oder als eines von zwei oder mehr miteinander copolymerisierbaren Monomeren - eingegrenzt wird.

Die Variation der zudosierten Menge mindestens eines Vernetzers über den Dosierzeitraum kann zu jedem beliebigen Zeitpunkt innerhalb des Dosierzeitraums einsetzen und enden. Weiterhin ist es möglich, daß die Variation mindestens eines Vernetzers über den Dosierzeitraum mehrfach beginnt und wieder endet. Die Variation mindestens eines Vernetzers kann nach dem ersten Drittel, bevorzugt nach dem ersten Viertel und besonders bevorzugt mit dem Beginn des Dosierzeitraums einsetzen und vor Beginn des letzten Drittels, bevorzugt vor Beginn des letzten Viertels und besonders bevorzugt vor Ende des Dosierzeitraums beendet werden. Die Ausführungen gelten gleichfalls für Beginn und Ende der Zudosierung der Vernetzer, deren zudosierte Menge über den Dosierzeitraum konstant bleibt.

Bei der Herstellung des erfindungsgemäßen Hartsegments H1 ist es bevorzugt, daß die zudosierte Menge mindestens eines Vernetzers mit funktionellen Gruppen unterschiedlicher Reaktivität über den Dosierzeitraum zunimmt. Besonders bevorzugt ist es, wenn die zudosierte Menge mindestens eines Vernetzers mit zwei oder mehr funktionellen Gruppen unterschiedlicher Reaktivität über den Dosierzeitraum zunimmt und die zudosierte Menge mindestens eines Vernetzeres mit zwei oder mehr funktinellen Gruppen gleicher Reaktivität über den Dosierzeitraum konstant bleibt.

Weiterhin ist es erfindungsgemäß bevorzugt, daß das Hartsegment H1 durch Emulsionspolymerisation in wäßriger Phase in Gegenwart eines oder mehrerer Emulgatoren und Initiatoren bei einer Temperatur von 20 bis 90 °C hergestellt wird.

Die erfindungsgemäßen Hartsegmente H1 vorzugsweise für Pfropfgrundlagen werden bevorzugt durch ein Verfahren hergestellt, worin in einem ersten Schritt mindestens ein vinylaromatisches Monomer als Monomer oder als eines von zwei oder mehreren miteinander copolymerisierbaren Monomeren und eine Vernetzerkomponente, die mindestens einen Vernetzer mit zwei oder mehr funktionellen Gruppen unterschiedlicher Reaktivität, vorzugsweise mindestens Dihydrodicyclopentadienylacrylat aufweist, und in einem zweiten Schritt mit mindestens einem vinylaromatischen Monomer als Monomer oder als eines von zwei oder mehreren miteinander copolymerisierbaren Monomeren und mindestens einen Vernetzer mit zwei oder mehr funktionellen Gruppen unterschiedlicher Reaktivität, vorzugsweise mindestens Dihydrodicyclopentadienylacrylat und mindestens einem Vernetzer mit zwei oder mehr funktionellen Gruppen gleicher Reaktivität, vorzugsweise mindestens Divenylbenzol und/oder Butandioldiacrylat, polymerisiert werden, wobei die zudosierte Menge mindestens eines Vernetzers über den Dosierzeitraum variiert. Besonders bevorzugt ist das zuvor beschriebene Herstellungsverfahren für das erfindungsgemäße Weichsegment H1, wenn im zweiten Schritt die zudosierte Menge mindestens eines Vernetzers über den Dosierzeitraum variiert.

Weiterhin ist es erfindungsgemäß bevorzugt, wenn in dem zuvor beschriebenen Verfahren im zweiten Schritt die zudosierte Menge mindestens eines Vernetzers mit funktionellen Gruppen unterschiedlicher Reaktivität über den Dosierzeitraum zu- und die Menge mindestens eines Vernetzers mit funktionellen Gruppen gleicher Reaktivität über den Dosierzeitraum abnimmt.

Für den Fall, daß das Hartsegment H1 als Pfropfgrundlage eingesetzt wird, insbesondere im Fall des Pfropfcopolymerisats P1" und P2", ist es bevorzugt, das die Pfropfgrundlage bildende Hartsegment mittels eines Saatlatex, in dem vorzugsweise über den Dosierzeitraum die zudosierte Menge mindestens eines Vernetzers mit zwei oder mehr funktionellen Gruppen unterschiedlicher Reaktivität zunimmt, und durch weitere Zugabe von mindestens einem Monomer, vorzugsweise dem gleichen, und mindestens eines weiteren Vernetzers, vorzugsweise dem im Saatlatex bereits eingesetzten, herzustellen. Hierbei ist es besonders bevorzugt, wenn über den Dosierzeitraum der Zugabe von mindestens einem weiteren Monomern zusätzlich mindestens ein Vernetzer mit zwei oder mehr funktionellen Gruppen gleicher Reaktivität zugesetzt wird. Auch bei dieser auf die Herstellung des Saatlatex folgende Zugabe von mindestens einem Monomer und mindestens einem Vernetzer ist es vorteilhaft, wenn die zudosierte Menge mindestens eines Vernetzers mit zwei oder mehr funktionellen Gruppen unterschiedlicher Reaktivität über den Dosierzeitraum zunimmt.

Das zuvor beschriebene Zwei-Schritt-Verfahren wird vorzugsweise zur Herstellung von Hartsegmenten H1 eingesetzt, die als Pfropfgrundlage in einem Propfcopolymerisat verwendet werden. Weiterhin kann es erfindungsgemäß sein, das Zwei-Schritt-Verfahren für die Herstellung von Hartsegmenten einzusetzen, die in einem Pfropfcopolymerisat als Pfropfauflage verwendet werden.

Die beiden Schritte zur Herstellung der erfindungsgemäßen Hartsegemente H1 werden bevorzugt als Emulsionspolymerisat, vorzugsweise in wäßriger Phase, in Gegenwart eines oder mehrerer Emulgatoren und Initiatoren, die für jeden Schritt gleich oder unterschiedlich sein können, bei für jeden Schritt gleichen oder unterschiedlichen Temperaturen im Bereich von 30 bis 90, bevorzugt 50 bis 80 und besonders bevorzugt 55 bis 75°C durchgeführt.

Für die Herstellung der Hartsegmente H1 werden vorzugsweise zunächst in einem Schritt ein vernetzter Saatlatex aus einem Monomer H1.1, bevorzugt Styrol, und einem Vernetzer α und/oder β, bevorzugt Dihydrodicyclopentadienylacrylat, erzeugt. Im allgemeinen hat der erfindungsgemäße Saatlatex vorzugsweise eine mittlere Teilchengröße (d₅₀) von 20 bis 150, bevorzugt von 50 bis 100 nm. Anschließend wird der Saatlatex in einem weiteren Schritt mit weiteren Monomeren H1.1, bevorzugt Styrol, und Vernetzer, bevorzugt Vernetzer mit zwei oder mehr funktionellen Gruppen unterschiedlicher Reaktivität und/oder gleicher Reaktivität, Emulgatoren, Polymerisationshilfsstoffen und Initiatoren zu den erfindungsgemäßen Hartsegmenten H1 umgesetzt.

Es ist gleichfalls möglich, die Hartsegmente H1 in einem Einschritt-Verfahren herzustellen. In einem solchen Verfahren wird mindestens ein vinylaromatisches Monomer als Monomer oder als eines von zwei oder mehreren miteinander copolymerisierbaren Monomeren und einer Vernetzer-Komponente, die mindestens einen Vernetzer mit zwei oder mehr funktionellen Gruppen unterschiedlicher Reaktivität, vorzugsweise mindestens Dihydrodicyclopentadienylacrylat. und einen Vernetzer mit zwei oder mehr funktionellen Gruppen gleicher Reaktivität, vorzugsweise mindestens Divinylbenzol und/oder Butandioldiacrylat. aufweist, polymerisiert, wobei die zudosierte Menge mindestens eines Vernetzers über den Dosierzeitraum variiert.

Besonders bevorzugt ist es jedoch, daß die zudosierte Menge mindestens eines Vernetzers mit funktionellen Gruppen unterschiedlicher Reaktivität über den Dosierzeitraum zunimmt. Weiterhin können auch hier geeignete Emulgatoren, Initiatoren und Polymerisationshilfsstoffe, wie oberflächenaktive Substanzen, zugegen sein.

Ferner kann der zweite Schritt auch vor dem ersten Schritt erfolgen. In diesem Fall wird zuerst mindestens ein vinylaromatisches Monomer als Monomer oder als eines von zwei oder mehreren miteinander copolymerisierbaren Monomeren und einer Vernetzerkomponente, die mindestens einen Vernetzer mit zwei oder mehr funktionellen Gruppen unterschiedlicher Reaktivität, vorzugsweise mindestens Dihydrodicyclopentadienylacrylat, und mindestens einen Vernetzer mit zwei oder mehr funktionellen Gruppen gleicher Reaktivität, vorzugsweise mindestens Divinylbenzol und/oder Butandioldiacrylat, aufweist, und in einem darauf folgenden Schritt mindestens ein vinylaromatisches Monomer als Monomer oder als eine von zwei oder mehreren miteinander copolymerisierbaren Monomeren und einer Vernetzer-Komponente, die mindestens einen Vernetzer mit zwei oder mehr funktionellen Gruppen unterschiedlicher Reaktivität, vorzugsweise mindestens Dihydrodicyclopentadienylacrylat, aufweist, polymerisiert.

Es ist bei dieser Verfahrensvariante vorzugsweise zu beachten, daß die zudosierte Menge mindestens eines Vernetzers über den Dosierzeitraum variiert, wobei es besonders bevorzugt ist, daß die zudosierte Menge mindestens eines Vernetzers mit funktionellen Gruppen unterschiedlicher Reaktivität über den Dosierzeitraum zunimmt.

Weiterhin lassen sich die erfindungsgemäßen Hartsegmente H1 auch durch Verfahren mit mehr als zwei Schritten, beispielsweise drei, vier, fünf, sechs und sieben Schritten, herstellen. Bei diesen vielschrittigen Herstellungsverfahren sind die Schrittabfolgen beliebig kombinierbar, wobei die zudosierte Menge mindestens eines Vernetzers über den Dosierzeitraum variiert oder vorzugsweise die zudosierte Menge mindestens eines Vernetzers mit funktionellen Gruppen unterschiedlicher Reaktivität über den Dosierzeitraum zunimmt.

Die Morphologie des Hartsegments H1 hängt von der Herstellungsvariante ab. So besitzt das Hartsegment H1, das in einem Schritt hergestellt wurde, eine einheitliche Morphologie. Die Hartsegmente H1, die in Zwei- oder Mehr-Schritt-Verfahren hergestellt wurden, besitzen in Abhängigkeit der Zahl der Schritte verschiedene Bereiche unterschiedlicher Morphologie.

Wird das erfindungsgemäße Hartsegment H1 als Pfropfgrundlage verwendet, ist ein Herstellungsverfahren mit zwei oder mehr Schritten bevorzugt. Für den Fall, daß das erfindungsgemäße Hartsegment H1 als Pfropfauflage verwendet wird, so wird das in einem Schritt erfolgende Herstellungsverfahren bevorzugt.

Die erfindungsgemäßen Weichsegmente weisen vorzugsweise eine Glasübergangstemperatur von höchstens 0, bevorzugt höchstens -20 und insbesondere bevorzugt von -100 bis -30°C auf. Die mittlere Teilchengröße (d₅₀) der Weichsegmente beträgt bis zu 150 nm, insbesondere 40 bis 110 nm und besonders bevorzugt 50 bis 100 nm, wenn diese als Pfropfgrundlagen in einem Pfropfcopolymerisat eingesetzt werden. Besonders bevorzugt sind jedoch Pfropfgrundlagen aus Weichsegment mit einer mittleren Teilchengröße (d₅₀) von 60 bis 150 nm.

Gleichfalls kann die mittlere Teilchengröße (d₅₀) der Weichsegmente 100 bis 2000, bevorzugt 350 bis 1000 und besonders bevorzugt 400 bis 550 nm betragen, wenn diese als Pfropfgrundlagen in einem Pfropfcopolymerisat eingesetzt werden.

Die erfindungsgemäßen Weichsegmente beinhalten mindestens ein Acrylat als Monomer oder als eines von zwei oder mehr miteinander copolymerisierbaren Monomeren und mindestens einen Vernetzer.

Wenn die Erfindungsgemäße Weichsegmente als Pfropfgrundlage eingesetzt werden, beinhalten diese vorzugsweise als Vernetzer mindestens einen Vernetzer mit zwei oder mehr funktionellen Gruppen unterschiedlicher Reaktivität und/oder mindestens einen Vernetzer mit zwei oder mehr funktionellen Gruppen gleicher Reaktivität, wobei die Konzentration mindestens eines Vernetzers im Weichsegment variiert.

Bei bevorzugt als Pfropfgrundlage eingesetzten erfindungsgemäßen Weichsegmenten ist es besonders vorteilhaft, daß die Konzentration von mindestens einem Vernetzer mit zwei oder mehr funktionellen Gruppen unterschiedlicher Reaktivität vom Inneren zum Äußeren des Weichsegments zunimmt.

Die erfindungsgemäßen Weichsegmente werden nun exemplarisch anhand des Weichsegments P1'.1 beschrieben.

Die erfindungsgemäßen Weichsegmente P1'.1 sind vorzugsweise aufgebaut aus 50 bis 99,9, bevorzugt 75 bis 99,9 und besonders bevorzugt 90 bis 99,9 Gew.-% eines Acrylats (P1'.1.1); 0 bis 50, bevorzugt 0 bis 25 und besonders bevorzugt 0 bis 10 Gew.-% eines mit dem Monomeren P1'.1.1 copolymerisierbaren Monomeren (P1'.1.2); sowie 0,1 bis 20, bevorzugt 0,1 bis 5 und besonders bevorzugt 0,1 bis 3 Gew.-% mindestens eines Vernetzers (P1.1.3).

Weitere erfindungsgemäße Weichsegmente P1'.1 enthalten vorzugsweise mindestens ein Alkylacrylat P1'.1.1 und gewünschtenfalls mindestens ein mit den Monomeren P1'.1.1 copolymerisierbares Monomer P1'.1.2 sowie mindestens ein Vernetzer α oder β oder deren Mischung (P1'.1.3). Dabei beträgt der Anteil der Alkylacrylate P1'.1.1 erfindungsgemäß vorzugsweise von 30 bis 99,9 Gew.-%, der der Monomeren P1'.1.2 von 0,1 bis 50 Gew.-% und der der Vernetzer P1'.1.3 0 bis 20 Gew.-%. Bevorzugt beinhalten die Weichsegmente P1'.1 60 bis 99,9, insbesondere 65 bis 99 Gew.-% P1'.1.1, 0 bis 39,9, bevorzugt 0 bis 30 Gew.-% P1'.1.2 und 0,1 bis 10, bevorzugt 1 bis 5 Gew.-% P1'.1.3. Die Gewichtsangaben sind jeweils auf die Summe der Komponenten P1'.1.1 bis P1'.1.3 bezogen.

Als Monomere P1'.1.1. vorzugsweise Acrylate, besonders bevorzugt Alkylacrylate, vorzugsweise mit maximal 20 C-Atomen, kommen Acrylsäurealkylester, Acrylsäurephenylalkylester oder Acrylsäurephenoxyalkylester mit bis zu 18 C-Atomen, insbesondere solche mit 2 bis 8 C-Atomen im Alkylrest allein oder in Mischung in Betracht. Insbesondere sind Acrylsäure-n-butylester und Acrylsäureethylhexylester, z.B. Acrylsäurethyl-n-hexylester geeignet. Weiterhin können alle ansonsten bekannten Kautschukelastomeren bildenden Monomere wie Diene, beispielsweise 1,3-Butadien, und Organosiloxane wie Dimethylsiloxane verwendet werden.

Beispiele für die Monomere P1'.1.2, vorzugsweise mit maximal 20 C-Atomen, sind von P1'.1.1 unterschiedliche Acrylsäure- oder Methacryrsäurederivate, darunter bevorzugt deren Ester oder Amide. Daneben kommen bevorzugt Styrol, kernsubstituierte Styrole, α-Methylstyrol, Acrylnitril, Diene wie Butadien oder Isopren als copolymerisierbare Monomere P1'.1.2 in Betracht. Es können selbstverständlich auch Mischungen unterschiedlicher Monomere P1'.1.2 verwendet werden. Die Monomere P1'.1.2 sollten mit den Monomeren P1'.1.1 copolymerisierbar sein.

Als Vernetzer P1.1.3 kommen vorzugsweise ein oder mehrere der üblicherweise verwendeten, vernetzend wirkenden Monomere in Betracht, die sowohl einzeln als auch als Mischung miteinander eingesetzt werden können. Eine bevorzugte Vernetzerkomponente kann Dihydrodicyclopentadienylacrylat (α) allein oder in Kombination mit mindestens einem anderen Vernetzer mit zwei oder mehr funktionellen Gruppen unterschiedlicher Reaktivität (β) enthalten. Erfindungsgemäß bestehen die Vernetzerkomponenten vorzugsweise aus 0,1 bis 100, bevorzugt 25 bis 100 und besonders bevorzugt 30 bis 100 Gew.-%, bezogen auf α und β, aus α und aus 0 bis 99,9 bevorzugt 0 bis 75 und besonders bevorzugt 0 bis 70 Gew.-%, bezogen auf α und β, aus β. Besonders bevorzugt enthält die Vernetzerkomponente von 50 bis 100 Gew.-% α und von 0 bis 50 Gew.-% β.

Beispiele geeigneter Vernetzer α und β für das Weichsegment P1'.1 stimmen mit den für H aufgeführten Vernetzern α und β überein. Die bei H1 bevorzugten Mischungen der Vernetzer α und β sind hier gleichfalls bei P1'.1 bevorzugt. Die Aufzählung weiterer geeigneter Vernetzer H1.4 gilt gleichfalls für geeignete Vernetzer P 1'.2.3 mit zwei oder mehr funktionellen Gruppen gleicher Reaktivität.

Die Wahl des Vernetzers P1'.1.3 richtet sich beispielsweise danach, welches Netzwerk das Weichsegment P1'.1 entweder als Pfropfgrundlage oder als Pfropfauflage aufweisen soll. Ein kompaktes Netzwerk ergibt sich beispielsweise, wenn Vernetzer α zusammen mit Divinylbenzol und/oder Butandioldiacrylat verwendet wird. Während ein relativ lockeres Netzwerk erhalten wird, wenn beispielsweise Vernetzer α mit Tetraethylenglycoldiacrylat oder -dimethacrylat eingesetzt wird.

Zu den besonders bevorzugten Vernetzermischungen zählen Dihydrodicyclopentadienylacrylat und Butandioldiacrylat; Dihydrodicyclopentadienylacrylat und Divinylbenzol; Dihydrodicyclopentadienylacrylat und Diethylenglycoldiacrylat; sowie Dihydrodicyclopetadienylacrylat und Tetraethylenglycoldimethacrylat. Weitere Vernetzermischungen fiir die Weichsegmente P1'.1 entsprechen den Auflistungen für Vernetzermischungen fiir das Hartsegment H1.

In den Weichsegmenten P1'.1 können somit Vernetzer mit zwei oder mehr funktionellen Gruppen gleicher Reaktivität und Vernetzer mit zwei oder mehr funktionellen Gruppen unterschiedlicher Reaktivität jeweils für sich oder in Kombination vorliegen.

Die Weichsegmente lassen sich sowohl in einem als auch in mehreren Schritten, beispielsweise zwei, drei, vier, fünf oder sechs, bevorzugt zwei und drei und besonders bevorzugt zwei Schritten herstellen. Wird ein erfindungsgemäßes Weichsegment als Pfropfgrundlage eingesetzt, so ist die Herstellung eines Saatlatex in Form einer Ein-Schritt-Synthese besonders bevorzugt.

Eine Ausführungsform der Ein-Schritt-Synthese des Weichsegments liegt dann vor, wenn entweder ein Vernetzer mit zwei oder mehr funktionellen Gruppen gleicher Reaktivität oder ein Vernetzer mit zwei oder mehr funktionellen Gruppen unterschiedlicher Reaktivität verwendet wird. In einer weiteren Ausführungsform können bei der Ein-Schritt-Synthese ein oder mehrere Vernetzer beider Gattungen verwendet werden. Die Ein-Schritt-Synthese kann sowohl zur Herstellung von Pfropfgrundlagen als auch von Pfropfauflagen aus Weichsegment verwendet werden.

Gleichfalls können Pfropfgrundlagen und Pfropfauflagen aus Weichsegment durch eine Mehr-Schritt-Synthese hergestellt werden. Die Ein- oder Mehr-Schritt-Synthese erfolgt analog zu den entsprechenden Synthesen von H1 unter Verwendung der zuvor beispielhaft für P1'.1 beschriebenen Monomeren und Vernetzer.

Erfolgt die Synthese in einem Schritt, besitzt das Weichsegment in der Regel eine einheitliche Morphologie. Wenn die Synthese in mehreren Schritten durchgeführt wird, kann das Weichsegment eine Morphologie mit unterschiedlichen Phasen aufweisen.

Es kann jedoch gleichfalls erfindungsgemäß bevorzugt sein, die Weichsegmente herzustellen, ohne die zudosierte Menge eines oder mehrerer Vernetzer zu variieren. Erfindungsgemäß besonders bevorzugt ist es jedoch, daß in einem erfindungsgemäßen Pfropfcopolymerisat neben der Variation mindestens eines Vernetzers in einem Hartsegment auch in mindestens einem Weichsegment dieses Pfropfcopolymerisats die Konzentration mindestens eines Vernetzers variiert wird. In diesem Zusammenhang noch darüber hinausgehend bevorzugt ist ein Pfropfcopolymerisat mit einem Weichsegment als Pfropfgrundlage, in dem lediglich in diesem Weichsegment und in dem darauffolgenden Hartsegment die Konzentration mindestens eines Vernetzers variiert wird, wobei das Weichsegment vorzugsweise in Form eines Saatlatex vorliegt und für diesen Fall die Ausführungen zum Saatlatex unter Hartsegment H1, gelten. Die weiteren Weichsegmente dieses Pfropfcopolymerisats weisen keine Variation der Vernetzerkonzentration auf.

Im allgemeinen gilt für die Herstellung von Weichsegmenten, deren Vernetzerkonzentration variiert, daß die zudosierte Menge mindestens eines Vernetzers über den Dosierzeitraum variiert, bevorzugt die zudosierte Menge mindestens eines Vernetzers mit funktionellen Gruppen unterschiedlicher Reaktivität über den Dosierzeitraum zunimmt.

Die Weichsegmente besitzen vorzugsweise in der Regel Gelgehalte von mindestens 90%, bevorzugt mindestens 95%, und Quellungsindices im allgemeinen von 7 bis 15.

Ferner können die erfindungsgemäßen Pfropfcopolymerisate P1 bzw. P2 - stellvertretend für P1' und P1" bzw. P2' und P2" - vorzugsweise mindestens 1, bevorzugt 1 bis 7 und besonders bevorzugt 1 bis 3 zusätzliche Segmente, nämlich P1.3 bzw. P2.4, enthalten, wobei diese(s) Segment(e) vorzugsweise 0,1 bis 90, besonders bevorzugt 5 bis 50 Gew.-%, des dann entstehenden Pfropfcopolymerisats ausmachen. Dieses Segment, im folgenden stellvertretend für P1.3 bzw. P2.4 als P1.3 bezeichnet, enthält vorzugsweise mindestens ein vinylaromatisches Monomer, wie im einzelnen unter H1.1 ausgeführt. Darüber hinaus kann P1.3 ggf. weitere Monomere enthalten, wobei Monomere bevorzugt sind, die mit dem vinylaromatischen Monomer copolymerisierbar sind. Gegebenfalls kann das Segment P1.3 einen oder mehrere Vernetzer enthalten, wobei die unter H1 beschriebenen Vernetzer besonders bevorzugt sind. Vorzugsweise besteht P1.3 aus einer oder mehreren Polymerzusammensetzungen P1.3.1 und P1.3.2 in vorzugsweise beliebiger Reihenfolge. Erfindungsgemäß ist es besonders bevorzugt, wenn die Polymerzusammensetzungen P1.3.1 und P1.3.2 mit P1.3.1 beginnend alternierend aufeinanderfolgen. Die Zahl der aufeinanderfolgenden und bevorzugt alternierend aufeinanderfolgenden Polymerzusammensetzungen P1.3.1 und P1.3.2 beträgt von 2 bis 10, bevorzugt von 2 bis 7 und besonders bevorzugt von 2 bis 5.

Ein besonders bevorzugtes Segment P1.3 beinhaltet in beliebiger, bevorzugt in dieser Reihenfolge, eine Polymerzusammensetzung P1.3.1, enthaltend
P1.3.1.1) 30 bis 99,9 Gew.-% mindestens eines vinylaromatischen Monomeren,
P1.3.1.2) 0 bis 50 Gew.-% mindestens eines mit P1.3.1.1 copolymerisierbaren Monomeren,
P1.3.1.3) 0,1 bis 20 Gew.-% eines Vernetzers α oder β oder deren Mischungen
und/oder, bevorzugt und, eine zweite Polymerzusammensetzung P1.3.2, enthaltend
P1.3.2.1) 50 bis 100 Gew.-% mindestens eines vinylaromatischen Monomeren und
P1.3.2.2) 0 bis 50 Gew.-% mindestens eines mit P1.3.2.1 copolymerisierbaren Monomeren,
wobei die Summe der Gewichtsprozente von P1.3.1.1 bis P1.3.1.3 und von P1.3.2.1 bis P1.3.2.2 jeweils 100 ergibt.

Für den Fall, daß mehrere Polymerzusammensetzungen P1.3.1 und/oder P1.3.2 aufeinanderfolgen, ist es erfindungsgemäß bevorzugt, daß die Zusammensetzungen der einzelnen Bestandteile der aufeinanderfolgenden Polymerzusammensetzungen innerhalb der oben angegebenen Grenzen variieren können.

Die Herstellung des Segments P1.3 kann in einem oder in mehreren Schritten erfolgen. Eine Synthese in einem Schritt ist dann bevorzugt, wenn kein oder nur ein Vernetzer eingesetzt wird. Eine in mehreren Schritten erfolgende Herstellung ist dann vorteilhaft, wenn zwei und mehr Vernetzer verwendet werden. Besonders bevorzugt ist das in mehreren Schritten erfolgende Herstellungsverfahren für Polymerzusammensetzungen des Typs P1.3.1. Für die in einem oder mehreren Schritten erfolgende Herstellung gelten gleichfalls die Ausführungen zur Herstellung des Hartsegments H1, wobei es hier vorzugsweise nicht auf eine Variation der zudosierten Vernetzermenge ankommt.

Im allgemeinen weisen die in den erfindungsgemäßen Pfropfcopolymeren P1 und P2 (die folgenden Angben gelten gleichfalls fiir P1' und P1" sowie für P2'und P2") verwandten Pfropfgrundlagen P1.1 bzw. P2.1 eine mittlere Teilchengröße (d₅₀) von 60 bis 150, bevorzugt von 80 bis 120 und besonders bevorzugt von 85 bis 110 nm auf.

Pfropfgrundlage und erste Pfropfauflage der erfindungsgemäßen Pfropfcopolymerisate P1 und P2 weisen vorzugsweise eine mittlere Teilchengröße von (d₅₀) 200 bis 800, bevorzugt 200 bis 500 und besonders bevorzugt von 200 bis 350 nm auf.

Das erfindungsgemäße Pfropfcopolymerisat P2 weist mit erster und zweiter Pfropfauflage eine mittlere Teilchengröße von 300 bis 1.500, bevorzugt 350 bis 800 und besonders bevorzugt von 400 bis 550 nm auf.

Die erfindungsgemäßen Pfropfcopolymere P1 und P2 weisen jeweils zusammen mit den Segmenten P1.3 bzw. P2.4 vorzugsweise eine mittlere Teilchengröße (d₅₀) von 350 bis 2.000, bevorzugt 400 bis 800 und besonders bevorzugt von 450 bis 600 nm auf.

Die Pfropfcopolymerisation zur Herstellung der erfindungsgemäßen Pfropfcopolymerisate P1 und P2 wird vorzugsweise im allgemeinen so gesteuert, daß die Massenverhältnisse der Pfropfgrundlagen, vorzugsweise aus Weichsegmenten, und der Pfropfauflagen, vorzugsweise aus Hartsegmenten, von 1 : 1 bis 1: 100, bevorzugt von 1 : 10 bis 1 : 50, sich ergeben. Weiterhin bevorzugte erfindungsgemäße Pfropfcopolymerisate weisen ein Massenverhältnis von Weichsegment zu Hartsegment von 1 : 20 bis 1 : 40 auf. Die Pfropfauflagen der erfindungsgemäßen Pfropfcopolymerisate P1 und P2 können prinzipiell jede Schichtdicke besitzen, wobei sie bevorzugt entweder eine mittlere Schichtdicke von bis zu 120 nm, bevorzugt 10 bis 110 nm und besonders bevorzugt 20 bis 100 nm oder 100 bis 2000 nm, bevorzugt 350 bis 1000 nm und besonders bevorzugt 450 bis 600 nm, aufweisen. Die mittlere Schichtdicke wird entsprechend der mittleren Teilchengröße aus den einzelnen Schichtdicken entwickelt.

Die Pfropfcopolymerisate können sowohl eine enge als auch eine breite Teilchen- bzw. Schichtdickenverteilung aufweisen. Bevorzugt besitzen sie eine enge Teilchengrößen- bzw. Schichtdickenverteilung. Die Teilchengrößenverteilung ist definiert als der Quotient Q = (d₉₀ - d₁₀)/d₅₀. Der d₁₀- bzw. der d₉₀-Wert ist analog dem d₅₀-Wert definiert, mit dem Unterschied, daß er auf 10 bzw. 90 Gew.-% der Teilchen bezogen ist. Weitere bevorzugte erfindungsgemäße Pfropfcopolymerisate P1 bzw. P2 weisen Q-Werte von ≤ 0,3, bevorzugt ≤ 0,15 und besonders bevorzugt 0,15 bis 0,01, auf. Die vorstehende Ausführung gilt gleichfalls für die Schichtdickenverteilung.

Selbst bei großen Teilchengrößen der Pfropfgrundlage, beispielsweise im Bereich von 400 bis 800 nm, oder wenn im Verhältnis zur auf die Pfropfauflage folgenden Pfropfgrundlagen deutlich mehr Pfropfgrundlage vorliegt, beispielsweise bei einem Gewichtsverhältnis von Pfropfgrundlage zu Pfropfauflage von 1 : 1 bis 50 : 1 und besonders bevorzugt 5 : 1 bis 20 : 1, haben die erfindungsgemäßen Pfropfcopolymerisate vorzugsweise eine nahezu perfekte Kern-Schale-Morphologie. Die Pfropfgrundlage bildet eine Kern mit definierten Phasengrenzen zur Pfropfauflage. Dieser wird im wesentlichen konzentrisch von der Pfropfauflage umhüllt. In der Regel beträgt die Breite der Phasengrenze von Pfropfgrundlage zur Pfropfauflage und zwischen den verschiedenen Pfropfauflagen im Mittel mindestens 50 nm, bevorzugt mindesten 10 nm und besonders bevorzugt mindestens 5 nm oder liegt im Bereich zwischen 0,1 bis 50 nm, bevorzugt 0,1 bis 10 nm und besonders bevorzugt 0,01 bis 5 nm.

Die Breite der Phasengrenze kann eiektronenmikroskopisch ermittelt werden. Hierzu werden Schnitte einer Dicke von weniger als 100 nm mittels eines Kryo-Ultramikrotoms angefertigt und diese 20 Minuten bei 30°C mit Rutheniumtetroxid bedampft. Nur die jeweils am Äquator geschnittenen Teilchen werden ausgemessen und der Mittelwert des Abstands der zu beurteilenden Phasengrenzen von 10 Teilchen bestimmt.

Neben der Breite der Phasengrenze der erfindungsgemäßen Pfropfcopolymerisate P1 und P2 läßt sich gleichfalls die Art des Übergangs an der Phasengrenze steuern. Es kann in den Pfropfcopolymerisaten ein scharfer Übergang oder ein diffuser Übergang vorliegen. Pfropfcopolymerisate mit einem scharfen Übergang weisen vorzugsweise eine sehr enge Phasengrenze mit einem abrupten Phasenübergang auf. Die Breite der Phasengrenze bei scharfen Übergängen beträgt 0,1 bis 10 nm, bevorzugt 0,1 bis 5 nm und besonders bevorzugt 0,1 bis 3 nm. Unter den Pfropfcopolymeren mit einem diffusen Übergang sind diejenigen bevorzugt, bei denen der diffuse Übergang, entlang einer von der Pfropfgrundlage aus, betrachtet von innen nach außen, verlaufenden Geraden, möglichst gleichmäßig verläuft. Bei den diffusen Übergängen sind größere Phasengrenzbereiche bevorzugt, beispielsweise 0,1 bis 5, bevorzugt 4 bis 10 und besonders bevorzugt 10 bis 100 nm.

Die Breite sowie die Art des Übergangs wird erfindungsgemäß vorzugsweise durch die Variation der Vernetzer gesteuert. Erfindungsgemäß gleichfalls bevorzugt ist es jedoch, wenn die Steuerung durch die Kombination der Vernetzervariation und der Auswahl geeigneter Zulaufraten erfolgt.

So kann in einer erfindungsgemäßen Ausführungsform durch die Abnahme der Konzentration mindestens eines Vernetzers mit zwei oder mehr funktionellen Gruppen gleicher Reaktivität und einem kleinen Verhältnis der Zulaufraten ein scharfer Phasenübergang erzeugt werden. Bei einer Abnahme mindestens eines Vernetzers mit zwei oder mehr funktionellen Gruppen gleicher Reaktivität und einem großen Verhältnis der Zulaufraten entsteht ein diffuser Phasenübergang. Bei einer Ausführungsform, in der mindestens ein Vernetzer mit zwei oder mehr funktionellen Gruppen unterschiedlicher Readivität zunimmt und das Verhältnis der Zulaufraten klein ist, entsteht ein scharfer Phasenübergang. Nimmt jedoch die Konzentration mindestens eines Vernetzers mit zwei oder mehr funktionellen Gruppen unterschiedlicher Reaktivität ab und ist das Verhältnis der Zulaufraten zueinander groß, so entsteht vorzugsweise ein diffuser Phasenübergang. In einer weiteren erfindungsgemäßen Ausführungsform entsteht ein scharfer Phasenübergang vorzugsweise dann, wenn sowohl mindestens ein Vernetzer mit zwei oder mehr funktionellen Gruppen gleicher Reaktivität als auch mindestens ein Vernetzer mit zwei oder mehr funktionellen Gruppen unterschiedlicher Reaktivität bei einem kleinen Verhältnis der Zulaufraten in ihrer Konzentration abnehmen. Das Verhältnis der Zulaufraten Z1 zu Z2 wird beispielhaft anhand des Pfropfcopolymers P1 beschrieben:

Z1 entspricht der Menge der Monomeren und Vernetzer P1.1.1 bis P1.1.4 [g/h]/Menge der Monomere P1.2.1 bis P1.2.3 [g/h]; Z2 gleicht der Menge Emulgator für P1.1 [g/h]/Menge Emulgator für P1.2 [g/h].

Erfindungsgemäß bevorzugte kleine Verhältnisse der Zulaufraten sind 0,05 bis 1, bevorzugt 0,1 bis 0,99 und besonders bevorzugt 0,2 bis 0,75. Erfindungsgemäß bevorzugte große Verhältnisse der Zulaufraten sind 1 bis 10, vorzugsweise 1 bis 5 und besonders bevorzugt 1 bis 3.

Die Herstellung der erfindungsgemäßen Pfropfcopolymerisate kann nach den u.a. aus DE-B-12 60 135, DE-A-23 11 129, DE-A-28 26 925, EP-A-81 761, EP-A-450 485 sowie US-A-3 691 260 bekannten Methoden erfolgen.

Bei der Herstellung der erfindungsgemäßen Pfropfcopolymerisate ist jedoch bevorzugt zu beachten, daß sie als Emulsionspolymerisation in einer wäßrigen Phase hergestellt werden, indem die Variation der Konzentration mindestens eines Vernetzers durch Zudosierung des mindestens einen Vernetzers erfolgt, wobei bevorzugt ist, daß die Variation, vorzugsweise Zunahme, der Konzentration mindestens eines Vernetzers mit zwei oder mehr funtkionellen Gruppen unterschiedlicher Reaktivität, vorzugsweise Dihydrodicyclopentadienylacrylat, durch Zudosierung des mindestens einen Vernetzers erfolgt. Unter Variation der Konzentration wird jeweils die Variation der Konzentration mindestens eines Vernetzers in dem entsprechenden Segment verstanden.

Als erstes wird die Pfropfgrundlage aus ihren Bestandteilen, vorzugsweise in wäßriger Emulsion bei 20 bis 100, bevorzugt 40 bis 80 und besonders bevorzugt 50 bis 70°C, polymerisiert. Es können übliche Emulgatoren, beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man dafür die Kalium- oder Natriumsalze von Alkylsulfonaten oder von Fettsäuren mit 10 bis 18 Kohlenstoffatomen. Es ist günstig, die Emulgatoren in einer Menge von 0,1 bis 5, bevorzugt 0,2 bis 2 Gew.-%, bezogen auf das Gesamtgewicht der für die Herstellung der die Pfropfgrundlage bildenden Segmente verwendeten Monomere, einzusetzen.

Im allgemeinen wird bei einem Wasser/Monomer-Verhältnis von 4:1 bis 0,7:1, bevorzugt 2:1 bis 0,8:1 und besonders bevorzugt 1,5:1 bis 1:1 gearbeitet. Als Polymerisationsinitiatoren dienen insbesondere die gebräuchlichen Persulfate, wie beispielsweise Kaliumperoxodisulfat; es sind jedoch auch Redoxsysteme geeignet. Die Menge der Initiatoren - beispielsweise 0,1 bis 2,5 Gew.-%, bezogen auf das Gesamtgewicht der Monomere - richtet sich in bekannter Weise nach dem gewünschten Molekulargewicht.Als Polymerisationshilfsstoffe können übliche Puffersubstanzen, durch die pH-Wert-Bereiche von vorzugsweise 6 bis 9 eingestellt werden, beispielsweise Natriumbicarbonat und Natriumpyrophosphat, sowie bis 3 Gew.-% eines Molekulargewichtsreglers, wie Mercaptane, Terpinol oder α-Methylstyrol, verwendet werden.

Die erste Pfropfauflage wird auf die Pfropfgrundlage aufgebracht, indem in Gegenwart der bevorzugt einen Latex darstellenden Pfropfgrundlage die Bestandteile der die Pfropfauflage bildenden Segmente polymerisiert werden. Dieses erfolgt vorzugsweise in einer wäßrigen Emulsion unter den gleichen Bedingungen, wie bei der Herstellung der Pfropfgrundlage beschrieben.

Das Aufbringen der Pfropfauflage auf die Pfropfgrundlage kann in einem oder in mehreren Schritten erfolgen, wobei die Reaktion in fünf, bevorzugt drei und besonders bevorzugt zwei Schritten durchgeführt wird.

Die nächsten Pfropfauflagen werden auf das Copolymerisat, bestehend aus Pfropfgrundlage und erster Pfropfauflage, aufgebracht, indem in Gegenwart dieses Copolymers die Bestandteile der die weitere Pfropfauflage bildenden Segmente miteinander polymerisiert werden. Dieses erfolgt vorzugsweise in einer wäßrigen Emulsion, unter analogen Bedingungen, wie bei der Herstellung des Copolymerisats aus Pfropfgrundlage und erster Pfropfauflage beschrieben.

Es ist vorteilhaft, die Pfropfcopolymerisation jeder zusätzlichen Pfropfauflage, beispielsweise P2.3, wiederum in wäßriger Emulsion in Gegenwart der aus Pfropfgrundlage und zwei Pfropfauflagen bestehenden Pfropfcopolymere durchzuführen. Die Pfropfcopolymerisation kann jedoch auch in Suspension, Masse oder Lösung erfolgen. Sie kann in dem System der ihr vorangegangenen Polymerisationen erfolgen, wobei vorzugsweise weiterer Emulgator und Initiator zugegeben werden kann, der nicht mit den zuvor eingesetzten übereinstimmen muß. Für die Auswahl und Kombination von Emulgatoren gelten die Ausführungen zur Herstellung der Pfropfgrundlage.

Die erfindungsgemäßen Pfropfcopolymerisate sind insbesondere nach einem Verfahren erhältlich, bei denen die die Pfropfgrundlage und die entsprechenden die Pfropfauflagen bildenden Segmente aus ihren Monomeren nacheinander in einer Emulsion bei Temperaturen von 20 bis 90, bevorzugt 50 bis 80 und besonders bevorzugt 55 bis 75°C polymerisiert werden. Erfindungsgemäß besonders bevorzugt kann es sein, wenn die Reaktionstemperaturen zur Herstellung oder Aufpfropfung eines Hartsegments 20 bis 80, bevorzugt 40 bis 80 und besonders bevorzugt 60 bis 80°C betragen. Für den Fall, daß ein Weichsegment hergestellt oder aufgepfropft wird, ist es besonders bevorzugt, daß die Reaktionstemperatur in einem Bereich von 20 bis 80, bevorzugt 50 bis 70 und besonders bevorzugt 60 bis 70°C liegt.

Die Art des Phasenübergangs zwischen zwei Segmenten kann durch die Menge an Restmonomer des zuerst polymerisierten Segments bei der Polymerisation des darauffolgenden Segments gesteuert werden. Je höher der Anteil an Restmonomeren ist, umso diffuser wird der Phasenübergang zwischen den beiden Segmenten.

Die erfindungsgemäßen Hartsegmente H1 und Pfropfcopolymerisate P1 und P2 können sowohl alleine als auch in Mischung mit anderen Pfropfcopolymerisaten oder Copolymerisaten verwendet werden. Sie eignen sich vorzugsweise als Schlagzähmodifizierer für, vorzugsweise in, thermoplastische Massen. Die erfindungsgemäßen Pfropfcopolymerisate P1 und P2 eignen sich insbesondere als Schlagzähmodifizierer für Thermoplaste, die eine Glastemperatur von mindestens 25°C, bevorzugt mindestens 60°C und besonders bevorzugt mindestens 80°C aufweisen. Beispiele sind Polyvinylchlorid (PVC), Polymethylmethacrylat sowie Copolymerisate aus vinylaromatischen Monomeren und polaren copolymerisierbaren, ethylenisch ungesättigten Monomeren sowie deren Mischungen.

Besonders bevorzugte Copolymerisate sind Styrol-acrylnitril-copolymerisate oder α-Methylstyrol-acrylnitril-copolymerisate. Zusätzlich können die thermoplastische, ebenfalls erfindungsgemäßen Massen andere Thermoplaste, insbesondere Polycarbonate, enthalten.

Zu den bevorzugten thermoplastischen Massen (T1) zählen solche, die
T1.i) 0,1 bis 95 Gew.-% mindestens eines der Pfropfcopolymere P1 bis P5 und/oder mindestens eine der Mischungen M1 bis M5,
T1.ii) 0 bis 94,9 Gew.-% mindestens eines von T1.i verschiedenen Pfropfcopolymerisats und/oder Mischung,
T1.iii) 5 bis 99,9 Gew.-% mindestens eines Copolymerisats aus
   T1.iii.1) 50 bis 100 Gew.-% mindestens eines vinylaromatischen Monomeren, C₁- bis C₁₈-Alkylacrylats, C₁- bis C₁₈-Alkylmethacrylats oder deren Mischungen und
   T1.iii.2) 0 bis 50 Gew.-% Acrylnitril, Methacrylnitril, Maleinsäureanhydrid, N-substituierten Maleimiden oder deren Mischungen, wobei die Summe der Gew.-% von T1.iii.1 und T1.iii.2 100 ergibt,
T1.iv) 0 bis 90 Gew.-% mindestens eines Polycarbonats und
T1.v) 0 bis 50 Gew.-% Zusatzstoffe, wobei die Summe von T1.i bis T1.iv 100 ergibt,
beinhalten.

Ferner ist es erfindungsgemäß besonders bevorzugt, wenn klein- bzw. großteilige Pfropfcopolymerisate von P1 bzw. von P2 vorzugsweise in den thermoplastischen Massen eingesetzt werden. Diese Mischungen beinhalten 10 bis 95, bevorzugt 30 bis 90 und besonders bevorzugt 60 bis 85 Gew.-% des kleinteiligen Pfropfcopolymerisats und 5 bis 90, bevorzugt 10 bis 70 und besonders bevorzugt 15 bis 40 Gew.-% des großteiligen Pfropfcopolymerisats.

Bevorzugte Pfropfcopolymerisate ii sind aufgebaut aus einer Pfropfgrundlage aus einem Material mit einer Glasübergangstemperatur von mindestens 25, bevorzugt mindestens 80 und insbesondere von 80 - 130 °C, d.h. einem harten, nicht elastischen Material. Diese Pfropfcopolymerisate ii beinhalten zwei oder mehr Pfropfauflagen, bevorzugt enthalten sie nicht mehr als drei Pfropfauflagen.

Bevorzugte Pfropfcopolymerisate ii beinhalten
ii.1) 5 - 90 Gew.-% einer Pfropfgrundlage aus einem Material mit einer Glasübergangstemperatur von mindestens 25 °C aus
   ii.1.1) 50 - 99,9 Gew.-% mindestens eines vinylaromatischen Monomeren,
   ii.1.2) 0 - 49,9 Gew.-% mindestens eines mit ii.1.1 copolymerisierbaren Monomeren und
   ii.1.3) 0,1 - 10 Gew.-% mindestens eines Vernetzers und
ii.2) 4,9 - 90 Gew.-% einer Pfropfauflage aus einem Material mit einer Glastemperatur von höchstens 0 °C aus
   ü.2.1) 50 - 100 Gew.-% mindestens eines C₁- bis C₁₈-Alkylacrylats, Diens oder Dialkylsiloxans,
   ii.2.2) 0 - 50 Gew. - % mindestens eines mit den Monomeren ii.2.1 copolymerisierbaren Monomeren und
   ii.2.3) 0 - 20 Gew.-% mindestens eines Vernetzers und
ii.3) 0,1 - 85 Gew-% einer zweiten Pfropfauflage aus einem Material mit einer Glasübergangstemperatur von mindestens 25 °C aus
   ii.3.1) 50 - 100 Gew.-% mindestens eines vinylaromatischen Monomeren,
   ii.3.2) 0 - 50 Gew.-% mindestens eines mit dem Monomeren ii.3.1 copolymerisierbaren Monomeren und
   ii.3.3) 0 - 20 Gew.-% mindestens eines Vernetzers und
ii.4) 5 - 90 Gew.-% einer dritten Pfropfauflage aus einem Material mit einer Glastemperatur von mindestens 25 °C aus
   ii.4.1) 1 - 99 Gew.-% mindestens eines vinylaromatischen Monomeren und
   ii.4.2) 1 - 99 Gew.-% mindestens eines mit dem Monomeren ii.4.1) copolymerisierbaren Monomeren, wobei die Summen der Gew.-% der einzelnen Komponentengruppen jeweils 100 ergeben sollte.

Besonders bevorzugte Pfropfcopolymerisate ii enthalten
5 - 20 Gew.-% ii.1,
40 - 65 Gew.-% ii.2,
10 - 25 Gew.-% ii.3 und
10 - 40 Gew.-% ii.4,
wobei die Summe der Komponenten ii.1 bis ii.4 100 ergibt.

Bevorzugt ist die Pfropfgrundlage ii.1 aufgebaut aus 60 - 99,8, insbesondere 70 - 99,5 Gew.-% ii.1.1, 0 - 39,8, insbesondere 0 - 29,5 Gew.-% ii.1.2 sowie 0,1 - 10, insbesondere 0,5 - 3 Gew.-% ii.1.3.

Bevorzugte Pfropfcopolymerisate ii sind aufgebaut aus einer Pfropfgrundlage aus einem Material mit einer Glastemperatur von höchstens 0, bevorzugt höchstens -10 und insbesondere von -30 °C, d.h. einem weichen, elastischen Material. Diese Pfropfcopolymerisate ii beinhalten zwei oder mehr Pfropfauflagen, bevorzugt enthalten sie nicht mehr als drei Pfropfauflagen.

Weitere bevorzugte Pfropfcopolymerisate ii beinhalten
ii.1) 4,9 - 94.9 Gew.-% einer Pfropfauflage aus einem Material mit einer Glastemperatur von höchstens 0 °C aus
   ii.1.1) 50 - 100 Gew.-% mindestens eines C₁- bis C₁₈-Alkylacrylats, Diens oder Dialkylsiloxans,
   ii.1.2) 0 - 50 Gew.-% mindestens eines mit den Monomeren ii.2.1 copolymerisierbaren Monomeren und
   ii.1.3) 0 - 20 Gew.-% mindestens eines Vernetzers und
ii.2) 0,1 - 85 Gew.-% einer zweiten Pfropfauflage aus einem Material mit einer Glasübergangstemperatur von mindestens 25 °C aus
   ii.2.1) 50 - 100 Gew.-% mindestens eines vinylaromatischen Monomeren,
   ii.2.2) 0 - 50 Gew.-% mindestens eines mit dem Monomeren ii.3.1 copolymerisierbaren Monomeren und
   ii.2.3) 0 - 20 Gew.-% mindestens eines Vernetzers und
ii.3) 5 - 90 Gew.-% einer dritten Pfropfauflage aus einem Material mit einer Glastemperatur von mindestens 25 °C aus
   ii.3.1) 1 - 99 Gew.-% mindestens eines vinylaromatischen Monomeren und
   ii.3.2) 1 - 99 Gew.-% mindestens eines mit dem Monomeren ii.3.1) copolymerisierbaren Monomeren, wobei die Summen der Gew.-% der einzelnen Komponentengruppen jeweils 100 ergeben sollte.

Weitere besonders bevorzugte Pfropfcopolymerisate ii enthalten
5 - 50 Gew.-% ii.1,
40 - 65 Gew.-% ii.2,
10 - 30 Gew.-% ii.3,
wobei die Summe der Komponenten ii.1 bis ii.3 100 ergibt.

Bevorzugt ist die Pfropfgrundlage ii.1 aufgebaut aus 60 - 99,8, insbesondere 70 - 99,5 Gew.-%, ii.1.1, 0 - 39,8, insbesondere 0 - 29,5 Gew.-%, ii.1.2 sowie 0,1 - 10, insbesondere 0,5 - 3 Gew.-%, ii.1.3.

Für Monomer- Vernetzerauswahl und Herstellungsverfahren sowie mittleren Teilchendurchmesser etc. gelten die vorangegangenen Ausführungen für Weich- und Hartsegmente mit analogem Aufbau. Die Pfropfcopolymerisate ii können nach an sich bekannten Methoden hergestellt werden, so daß hier beispielsweise auf die EP-A-450 485 verwiesen wird.

In der Regel bilden Massen, die nur die Komponenten i und ii enthalten, eine bimodale Teilchenmischung.

Neben den Komponenten i und ii können die Massen als Komponente iii ein oder mehrere Copolymerisate in Mengen von bevorzugt 5 - 95 Gew.-%, bezogen auf die Komponenten i bis v, enthalten. Bevorzugte Formmassen enthalten 20 - 79,9, insbesondere 40 - 74,9 Gew.-%, bezogen auf die Komponente i bis v, der Komponente iii.

Bevorzugte Copolymerisate beinhalten 60 - 80 Gew.-%, bezogen auf die Komponenten iii.1 und iii.2, an Monomeren iii.1, sowie 20 - 40 Gew.-%, bezogen auf die Komponente iii.1 und iii.2, an Monomeren iii.2.

Bevorzugte Copolymerisate iii sind solche, die aus wenigstens einem Monomeren aus der Gruppe Styrol, α-Methylstyrol, kernsubstituierte Styrole wie p-Methylstyrol und Methylmethacrylat, copolymerisiert mit wenigstens einem Monomeren aus der Gruppe Acrylnitril, Methacrylnitril und Maleinsäureanhydrid, bestehen.

Besonders bevorzugte Copolymerisate iii sind solche aus Styrol, Acrylnitril und ggf. Methylmethacrylat. Andere besonders bevorzugte Copolymerisate iii enthalten α-Methylstyrol, Acrylnitril und ggf. Methylmethacrylat. Daneben sind Copolymerisate iii aus Styrol, α-Methylstyrol sowie Acrylnitril und ggf. Methylmethacrylat besonders bevorzugt. Des weiteren zählen Copolymerisate aus Styrol und Maleinsäureanhydrid zu den besonders bevorzugten Copolymerisaten iii. Die Copolymerisate iii sind in der Regel harzartig, thermoplastisch und kautschukfrei.

In einer weiteren Ausführungsform sind die thermoplastischen Massen und die darin befindlichen Bestandteile, insbesondere die erfindungsgemäßen Pfropfcopolymerisate und deren Mischungen sowie die Komponenten ii und iii, kautschuk-, insbesondere dienkautschuk- und besonders bevorzugt butadien- und/oder isoprenkautschukfrei, um der DIN 16777/2 bzw. ISO 6402/1 zu entsprechen.

Die Copolymerisate iii sind an sich bekannt oder lassen sich durch an sich bekannte Methoden, beispielsweise radikalische Polymerisation, insbesondere durch Emulsions-, Suspensions-, Lösungs- oder Massepolymerisation herstellen. Sie weisen im allgemeinen Viskositätszahlen im Bereich von 40 - 60, vorzugsweise 60 - 100 ml/g auf. Dieses entspricht Molekulargewichten (Gewichtsmittelwert) Mw zwischen 50.000 und 250.000 g/mol. Gleichfalls können die Copolymerisate iii ein Molekulargewicht zwischen 1500 bis 50.000 g /mol aufweisen. Zudem können die Copolymerisate iii vorzugsweise als Mischung der niedermolekularen Copolymerisate iii mit einem Molekulargewicht von 1500 bis 50.000 g/mol alleine oder in Mischung mit den hochmolekularen Copolymeren iii mit einem Molekulargewicht zwischen 50.000 und 250.000 g/mol vorliegen.

Die Copolymerisate iii entstehen auch häufig bei der Pfropfcopolymerisation zur Herstellung der erfindungsgemäßen Pfropfcopolymerisate P1 bis P5 als Nebenprodukte, besonders dann, wenn große Mengen Monomere auf kleine Mengen Pfropfgrundlage gepfropft werden.

Als Komponente iv können die Massen 0 - 90, bevorzugt 0 -80 Gew.-% mindestens eines Polycarbonates enthalten.

Die Polycarbonate iv sind an sich bekannt und in der Literatur beschrieben.

Vorzugsweise können diese Polycarbonate durch Umsetzung von Kohlensäurederivaten wie Phosgen oder Diphenylcarbonat mit Diphenolen hergestellt werden. Grundsätzlich sind alle Diphenole verwendbar, wie sie beispielsweise in der Monographie von H. Schnell, "Chemistry and Physics of Polycarbonates", Interscience Publishers, 1964, sowie in der US-A-2 999 835 und in der DE-A-22 48 817 genannt sind.

Dihydroxydiphenyl, Di-(hydroxyphenyl)alkane und Di-(hydroxyphenyl)ether oder deren Mischung sind besonders bevorzugte Diphenole.

Geeignete Diphenole sind beispielsweise 1,3-Dihydroxybenzol, 1,4-Dihydroxybenzol, 2,6-Dihydroxynaphthalin, Di-(4-hydroxyphenyl)methan, 1,1-Di-(4'-hydroxyphenyl)ethan, 2,2-Di-(4'-hydroxyphenyl)propan (Bisphenol A), 2,2-Di-(3'-chlor-4'-hydroxyphenyl)propan, 2,2-Di-(3',5'-dichlor-4'-hydroxyphenyl)propan, 2,2-Di-(3',5'-dibrom-4'-hydroxyphenyl)propan, 2,2-Di-(3',5'-dimethyl-4'-hydroxyphenyl)propan, 2,4-Di-(4'-hydroxyphenyl)-2-methylbutan, Di-(4'-hydroxyphenyl)pentan, 1,1-Di-(4'-hydroxyphenyl)cyclohexan, 4,4'-Dihydroxydiphenylsulfon, 4,4'-Dihydroxydiphenylsulfit oder 4,4'-Dihydroxydiphenylether.

Besonders bevorzugtes Diphenol ist Bisphenol A sowie dessen Mischungen mit anderen Diphenolen. Der Anteil an Bisphenol A in derartigen Mischungen liegt im allgemeinen im Bereich von 70 - 98 Gew.-%.

Es können sowohl Homopolymerisate als auch Copolymerisate aus Mischungen unterschiedlicher Diphenole eingesetzt werden. Darüber hinaus können auch Blockcopolymerisate wie Diorganosiloxan-haltige Polycarbonate verwendet werden.

Die Polycarbonate iv können durch den Einbau von geringen Mengen, beispielsweise von 0,05 bis 2 mol-%, bezogen auf die Summe der eingesetzten Diphenole, an drei oder mehr als drei funktionellen Verbindungen, wie solchen mit drei oder mehr phenolischen OH-Gruppen, verzweigt sein.

Verfahren zur Herstellung von Polycarbonaten iv sind an sich bekannt. So können die Polycarbonate beispielsweise in heterogener Phase, dem sogenannten Phasengrenzflächenverfahren, oder in homogener Phase, dem sogenannten Pyridinverfahren, hergestellt werden. Verfahren zur Herstellung von Polycarbonat sind beispielsweise in den DE-A-22 48 817, 13 00 266, 14 95 739, 33 34 782 sowie der US-A-2 999 835 beschrieben.

Die relative Viskosität der Polycarbonate iv liegt im allgemeinen im Bereich von 1,2 - 1.5, vorzugsweise 1,28 - 1,4 dl/g, gemessen in 0,5 gew.-%iger Lösung in Dichlormethan bei 25 °C.

Die thermoplastischen Massen können als Komponente v Zusatzstoffe enthalten. Deren Anteil beträgt im allgemeinen von 0 - 50, vorzugsweise von 0,1 - 20 Gew.-%, bezogen auf das Gesamtgewicht der Komponenten i bis v.

Übliche Zusatzstoffe sind beispielsweise Glasfasern, Flammschutzmittel, Stabilisatoren und Oxidationsverzögerer, Mittel gegen Wärmezersetzung und Zersetzung durch ultraviolettes Licht, Gleit- und Entformungsmittel, Farbstoffe und Pigmente oder Weichmacher.

Es können Glasfasern aus E-, A- oder C-Glas verwendet werden. Meist sind die Glasfasern mit einer Schlichte und einem Haftvermittler ausgerüstet. Der Durchmesser der Glasfaser liegt im allgemeinen zwischen 6 und 20 µm. Es können sowohl Endlosfasern (rovings) als auch Schnittglasfasern mit einer Länge von 1 - 10, bevorzugt 3 - 6 mm, eingearbeitet werden.

Pigmente und Farbstoffe sind allgemein in Mengen bis zu 6, bevorzugt 0,5 - 5 und insbesondere bevorzugt 0,5 - 3 Gew.-%, bezogen auf die Komponenten i bis v, enthalten.

Die Pigmente zur Einfärbung von Thermoplasten sind allgemein bekannt, siehe beispielsweise R. Gächter und H. Müller, Taschenbuch der Kunststoffadditive, Carl Hanser Verlag, 1983, S. 494 - 510. Als erste bevorzugte Gruppe von Pigmenten sind Weißpigmente zu nennen, beispielsweise Zinkoxid, Zinksulfid, Bleiweiß (2 PbCO₃ · Pb(OH)₂), Lithophone, Antimonweiß und Titandioxid. Von den beiden gebräuchlichsten Kristallmodifikationen (Rutil- und Anastas-Typ) des Titandioxids wird insbesondere die Rutilform zur Weißfärbung der Formmassen verwendet.

Schwarze Farbpigmente, die eingesetzt werden können, sind beispielsweise Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnance- oder Gasruß eingesetzt wird (siehe hierzu G. Benzing, Pigmente für Anstrichmittel, Expert-Verlag (1988) S. 78ff).

Selbstverständlich können zur Einstellung bestimmter Farbtöne anorganische Buntpigmente wie Chromoxidgrün oder organische Buntpigmente wie Azopigmente oder Phthalocyanine eingesetzt werden. Derartige Pigmente sind allgemein im Handel erhältlich.

Oxidationsverzögerer und Wärmestabilisatoren, die den erfindungsgemäßen thermoplastischen Massen zugesetzt werden können, sind beispielsweise Halogenide von Metallen der Gruppe I des Periodensystems, beispielsweise Natrium-, Kalium-, Lithium-Halogenide, ggf. in Verbindung mit Kupfer-(I)-Halogeniden, beispielsweise Chloriden, Bromiden oder Iodiden. Die Halogenide, insbesondere des Kupfers, können auch noch elektronenreiche π-Liganden enthalten. Als Beispiele derartiger Kupferkomplexe seien Cu-Halogenid-Komplexe mit beispielsweise Triphenylphosphin genannt. Weiterhin können Zinkfluorid oder Zinkchlorid verwendet werden. Ferner sind sterisch gehinderte Phenole, Hydrochinone, substituierte Vertreter dieser Gruppe, sekundäre aromatische Amine, ggf. in Verbindung mit phosphorhaltigen Säuren, beispielsweise deren Salze, und Mischungen dieser Verbindungen, vorzugsweise in Konzentrationen bis zu 1 Gew.-%, bezogen auf die Komponenten i bis v, einsetzbar.

Beispiele für UV-Stabilisatoren sind verschiedene substituierte Resorcine, Salicylate, Benzotriazole und Benzophenone, die im allgemeinen in Mengen von bis zu 2 Gew.-%, bezogen auf die Komponenten i bis v, eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, beispielsweise Distearylketon, eingesetzt werden.

Beispiele für Weichmacher sind Dialkylphthalate, beispielsweise Dioctylphthalat.

Die thermoplastischen Massen können vorzugsweise nach an sich bekannten Verfahren hergestellt werden, indem man die Komponenten in üblichen Mischvorrichtungen, beispielsweise Schneckenextrudern, Brabender-Mühlen oder Banbury-Mühlen mischt und anschließend extrudiert. Nach der Extrusion wird das Extrudat abgekühlt und zerkleinert. Die thermoplastischen Massen zeichnen sich durch hohe Schlagzähigkeit, insbesondere bei tiefen Temperaturen, aus. Gleichzeitig weisen die thermoplastischen Massen eine hohe Witterungs- und Alterungsbeständigkeit auf. Außerdem lassen sie sich gut einfärben. Thermoplastische Massen mit erfindungsgemäßen kleinteiligen Pfropfcopolymerisaten, die vorzugsweise eine mittlere Teilchengröße (d₅₀) von höchstens 200 nm besitzen, weisen insbesondere eine Unabhängigkeit der mechanischen Eigenschaften von der Verarbeitungstemperatur vorzugsweise bei gleichbleibenden oder besseren weiteren Eigenschaften, insbesondere der Einfärbbarkeit, auf.

Sie lassen sich zu Formkörpern, Folien, Beschichtungen oder Fasern verarbeiten. Sie können auch beispielsweise mittels bekannter Co-Extrusionsverfahren in Form von Schichten (bevorzugt Schichtdicken im Bereich von 100 µm bis 10 mm) auf Oberflächen, bevorzugt auf Thermoplaste wie Styrol-Acrylnitril-Copolymere, Acrylnitril-Butadien-Styrol-Terpolymere (ABS), Methylmethacrylat-Butadien-Styrol (MABS), Polystyrol, schlagzähes Polystyrol (HIPS) oder PVC aufgebracht werden. Die Massen können beispielsweise im Automobilsektor, Haushaltsbereich und für Freizeitartikel eingesetzt werden. So können sie beispielsweise zu Automobilteilen, Straßenschildern, Fensterprofilen, Lampenabdeckungen, Gartenmöbeln, Booten, Surfbrettern oder Kinderspielzeug verarbeitet werden.

Eine erfindungsgemäß bevorzugte Ausführungsform des Pfropfcopolymerisats P1' mit definierter Kern-Schalen-Morphologie beinhaltet
P1'.1) 0,1 bis 99,8 Gew.-% mindestens einer Pfropfgrundlage aus einem Weichsegment mit einer Glastemperatur von höchstens 0°C und einer mittleren Teilchengröße (d₅₀) von mindestens 50 nm, aufgebaut aus
   P1'.1.1) 50 bis 100 Gew.-% mindestens eines Acrylats,
   P1'.1.2) 0 bis 50 Gew.-% mindestens eines mit dem Monomeren P1'.1.1 copolymerisierbaren Monomeren und
   P1'.1.3) 0 bis 20 Gew.-% mindestens eines in seiner Konzentration vom Inneren zum Äußeren der Pfropfgrundlage zunehmenden Vernetzers a oder β oder deren Mischung,
P1'.2) 0,1 bis 99,8 Gew.-% mindestens eine Pfropfauflage aus einem Hartsegment mit einer Glastemperatur von mindestens 25°C, aufgebaut aus
   P1'.2.1) 50 bis 99,8 Gew.-% mindestens eines vinylaromatischen Monomeren,
   P1'.2.2) 0 bis 49,8 Gew.-% mindestens eines mit dem Monomeren P1'.2.1 copolymerisierbaren Monomeren,
   P1'.2.3) 0,1 bis 25 Gew.-% einer in ihrer Konzentration vom Inneren zum Äußeren der Pfropfauflage zunehmenden Vernetzer-Komponente aus
      α) 0,1 bis 100 Gew.-% Dihydrodicyclopentydienylacrylat und
      β) 0 bis 99,9 Gew.-% mindestens eines weiteren Vernetzers mit zwei oder mehr funktionellen Gruppen unterschiedlicher Reaktivität und
   P1'.2.4) 0,1 bis 25 Gew.-% mindestens eines Vernetzers mit zwei oder mehr funktionellen Gruppen gleicher Reaktivität,
P1'.3) 0,1 bis 99,8 Gew.-% mindestens eines weiteren Segments, mindestens enthaltend ein vinylaromatisches Monomer,
wobei die Summe der Gew.-% von P1'.1 bis P1'.3 sowie P1'.1.1 bis P1'.1.3 und P1'.2.1 bis P1'.2.4 jeweils 100 ergibt.

Eine bevorzugte Ausführungsform des erfindungsgemäßen Pfropfcopolymerisats P1" mit definierter Kern-Schale-Morphologie beinhaltet
P1".1) 0,1 bis 99,8 Gew.-% mindestens einer Pfropfgrundlage aus einem Hartsegment mit einer Glastemperatur von mindestens 25 °C und einem mittleren Teilchengröße (d₅₀) von mindestens 50 nm, aufgebaut aus
   P1".1.1) 50 bis 99,8 Gew.-% mindestens eines vinylaromatischen Monomeren,
   P1".1.2) 0 bis 49,8 Gew.-% mindestens eines mit dem Monomeren P1".1.1 copolymerisierbaren Monomeren,
   P1".1.3) 0,1 bis 25 Gew.-% einer vom Inneren zum Äußeren der Pfropfgrundlage zunehmenden Vernetzerkomponente aus
      α) 0,1 bis 100 Gew.-% Dihydrodicyclopentadienylacrylat und
      β) 0 bis 99 Gew.-% mindestens eines weiteren Vernetzers mit zwei oder mehr funktionellen Gruppen unterschiedlicher Reaktivität und
   P1".1.4) 0,1 bis 25 Gew.-% mindestens eines Vernetzers mit zwei oder mehr funktionellen Gruppen gleicher Reaktivität,
P1".2) 0,1 bis 99,8 Gew.-% mindestens einer Pfropfauflage aus einem Weichsegment mit einer Glastemperatur von höchstens 0 °C aufgebaut aus
   P1".2.1) 50 bis 100 Gew.-% mindestens eines Acrylats,
   P1".2.2) 0 bis 50 Gew.-% mindestens eines mit dem Monomeren P1".2.1 copolymerisierbaren Monomeren und
   P1".2.3) 0 bis 20 Gew.-% mindestens eines vom Inneren zum Äußeren der Pfropfauflage zunehmenden Vernetzers α oder β oder deren Mischung und
P1".3) 0,1 bis 99,8 Gew.-% mindestens eines weiteren Segments mindestens enthaltend ein vinylaromatisches Monomer,
wobei die Summe der Gew.-% von P1".1 bis P1".3 sowie P1".1.1 bis P1".1.4 und P1".2.1 bis P1".2.3 jeweils 100 ergibt.

Eine bevorzugte Ausführungsform des erfindungsgemäßen Pfropfcopolymerisats P2' beinhaltet
P2'.1) 0,1 bis 95 Gew.-% mindestens einer Pfropfgrundlage aus einem Weichsegment mit einer Glasübergangstemperatur von höchstens 0°C und einer mittleren Teilchengröße (d₅₀) von mindestens 50 nm, aufgebaut aus
   P2'.1.1) 50 bis 100 Gew.-% mindestens eines Acrylats,
   P2'.1.2) 0 bis 50 Gew.-% mindestens eines mit dem Monomeren P2'.1.1) copolymerisierbaren Monomeren und
   P2'.1.3) 0 bis 20 Gew.-% mindestens eines in seiner Konzentration vom Inneren zum Äußeren der Pfropfgrundlage zunehmenden Vernetzers α oder β oder deren Mischung,
P2'.2) 0,1 bis 95 Gew.-% mindestens einer Pfropfauflage aus einem Hartsegment mit einer Glastemperatur von mindestens 25°C, aufgebaut aus
   P2'.2.1) 50 bis 99,8 Gew.-% mindestens eines vinylaromatischen Monomeren,
   P2'.2.2) 0 bis 49,8% Gew.-% mindestens eines mit dem Monomeren P2'.2.1 copolymerisierbaren Monomeren,
   P2'.2.3) 0,1 bis 25 Gew.-% einer in ihrer Konzentration vom Inneren zum Äußeren der Pfropfauflage zunehmenden Vernetzer-Komponente aus
      α) 0,1 bis 100 Gew.-% Dihydrodicyclopentydienylacrylat und
      β) 0 bis 99,9 Gew.-% mindestens eines weiteren Vernetzers mit zwei oder mehr funktionellen Gruppen unterschiedlicher Reaktivität und
   P2'.2.4) 0,1 bis 25 Gew.-% mindestens eines Vernetzers mit zwei oder mehr funktionellen Gruppen gleicher Reaktivität,
P2'.3) 4,7 bis 98,7 Gew.-% einer zweiten Pfropfauflage aus einem Weichsegment mit einer Glasübergangstemperatur von höchstens 0°C, aufgebaut aus
   P2'.3.1) 50 bis 100 Gew.-% mindestens eines Acrylats,
   P2'.3.2) 0 bis 50 Gew.-% mindestens eines mit dem Monomeren P2'.3.1) copolymerisierbaren Monomeren und
   P2'.3.3) 0 bis 20 Gew.-% mindestens eines Vernetzers α oder β oder deren Mischung,
P2'.4) 0,1 bis 99,7 Gew.-% mindestens eines weiteren Segments, mindestens enthaltend ein vinylaromatisches Monomer,
wobei die Summe der Gew.-% von P2'.1 bis P2'.4 sowie P2'.1.1 bis P2'.1.3, P2'.2.1 bis P2'.2.4 und P2'.3.1 bis P2'.3.3 jeweils 100 ergibt.

### BEISPIELE

### Anwendungstechnische Prüfungen

Die Teilchengrößen Gewichtsmittelwerte (d₅₀) wurden mittels einer analytischen Ultrazentrifuge entsprechend der in W. Scholtan, H. Lange, Kolloid-Z. und Z.-Polymere 250 (1972), Seiten 782 bis 796 beschriebenen Methode bestimmt.

Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der d₅₀-Wert aufweisen.

Die Kerbschlagzähigkeiten (aₖ [kJ/m²]) wurden bei den angegebenen Temperaturen gemäß ISO179/1eA an gespritzten und anschließend gefrästen (A-Kerbe) Normkleinstäben gemessen.

Untersucht wurden jeweils zwei Probenserien, die bei unterschiedlichen Verarbeitungstemperaturen hergestellt worden waren. Angegeben ist jeweils der Mittelwert aus der Prüfung von 10 Proben je Probenserie.

Die Viskositätszahlen (VZ[cm³/g]) wurden jeweils an einer 0,5 Gew.-%igen Lösung in Dimethylformamid bei 23°C bestimmt. Unlösliche Gelanteile wurden vor der Messung durch Zentrifugieren entfernt und die Einwaage entsprechend korrigiert.

ΔE ist ein Maß für die Einfärbbarkeit und wurde nach DIN6174 bestimmt. Der ΔE-Wert errechnet sich aus der Differenz der Opazität von 2mm dicken, bei 200°C gespritzten Rundscheiben über weißem und schwarzem Untergrund. Ist die so ermittelte Differenz ΔE klein, bedeutet dies, daß sich die Proben nur schlecht einfärben lassen.

Der Glanz wurde nach DIN67530 dadurch bestimmt, daß Licht bestimmter Intensität in einem Einstrahlwinkel von 45° auf die Probe eingestrahlt und die Intensität des reflektierten Lichtes mittels eines Photogoniometers gemessen wurde.

Die Feststoffgehalte der Emulsionen bezeichnen den Gehalt aller Feststoffanteile in Gewichtsprozent bezogen auf die Gesamtmasse der jeweiligen Emulsion.

### Abkürzungen

| | |
|---|---|
| Polybutylacrylat | PBA |
| Polystyrol | PS |
| Dihydrodicyclopcntadicnylacrylat | DCPA |
| n-Butandioldiacrylat | BDA |
| Natriumsalz ein C₁₂- bis C₁₈-Paraffinsulfonsäure | Na-Salz |
| Kaliumperoxodisulfat | KPDS |
| Natriumpyrrophosphat | NaPP |
| Pfropfcopolymerisat | PCP |
| n-Butylacrylat | BA |
| Styrol | S |
| Acrylnitril | AN |
| Saatlatex | SL |
| Kern | K |
| Pfropfauflage | PA |

### Herstellung der Pfropfcopolymerisate I1, I2

### Herstellung des Saatiatex (ISL1)

4.500 g Wasser, 30 g des Na-Salzes, 9 g KPDS, 12 g Natriumhydrogencarbonat und 1 g NaPP wurden unter Rühren und unter Stickstoff auf 65°C erwärmt und 2.940 g S innerhalb von 3 Stunden zugegeben. 60 g DCPA wurden so zudosiert, daß parallel zur Dosierung des S eine lineare Zunahme der Dosiermenge des DCPA über 3 Stunden erfolgte. Nach Beendigung der Monomerzugabe wurde die Emulsion noch eine Stunde bei 65°C gehalten. Der so erhaltenen PS-Latex hatte einen mittleren Teilchendurchmesser (d₅₀) von 80 nm. Der Feststoffgehalt der PS-Emulsion betrug 39,9%.

### Herstellung des Saatlatex (ISL2) zum Vergleich

Die PS-Pfropfgrundlage ISL2 wurde entsprechend ISL1 hergestellt, jedoch wurden S und DCPA gemeinsam innerhalb von 3 Stunden zudosiert. Der so erhaltene PS-Latex hatte einen mittleren Teilchendurchmesser (d₅₀) von 83 nm. Der Feststoffgehalt der PS-Emulsion betrug 39,9%.

### Herstellung des Kerns (I1K1)

4.200 g Wasser, 3 g des Na-Salzes, 1,75 g KPDS, 2,5 g Natriumhydrogencarbonat, 1 g NaPP und 40 g der nach ISL1 hergestellten Emulsion wurden auf 65°C erwärmt. Anschließend wurden 475 g Styrol und 15 g BDA innerhalb von 1 Stunde zugegeben. 10 g DCPA wurden so zudosiert, daß parallel zur Dosierung des Styrols eine lineare Zunahme der Dosiermenge des DCPA über 1 Stunde erfolgte. Nach Beendigung der Monomerzugabe wurde die Emulsion noch eine Stunde bei 65°C gehalten. Der Kern aus ISL1 und I1K1 hatte einen mittleren Teilchendurchmesser (d₅₀) von 237 nm. Der Feststoffgehalt der Emulsion betrug 8,7%.

### Herstellung des Kerns (I1K2) zum Vergleich

Die Pfropfauflage I1K2 wurde entsprechend I1K1 hergestellt, jedoch wurden Styrol, DCPA und BDA gemeinsam innerhalb von 1 Stunde zudosiert. Der Kern aus ISL2 und I1K2 hatte einen mittleren Teilchendurchmesser (d₅₀) von 241 nm. Der Feststoffgehalt der Emulsion betrug 8,8%.

### Herstellung der PBA-Pfropfauflage (I1PA1)

Zu 4.700 g der oben (I1K1) hergestellten Emulsion wurden 20 g des Na-Salzes, 7,5, g KPDS und 10 g Natriumhydrogencarbonat und 2 g NaPP gegeben. Bei 65°C wurden 2459 g BA innerhalb von 3,5 Stunden zugegeben. 50 g DCPA wurden so zudosiert, daß parallel zur Dosierung des BA eine lineare Zunahme der Dosiermenge des DCPA über 3 Stunden erfolgte. Nach Beendigung der Monomerzugabe wurde weitere 2 Stunden bei 65°C nachgerührt. Das Pfropfcopolymerisat aus ISL1, I1K1 und I1PA1 hatte einen mittleren Teilchendurchmesser (d₅₀) von 443 nm. Der Feststoffgehalt der Emulsion betrug 38,8%.

### Herstellung der Pfropfauflage (I1PA2) zum Vergleich

Die zweite Pfropfauflage I1PA2 wurde entsprechend I1PA1 hergestellt, jedoch wurden BA und DCPA gemeinsam innerhalb von 3,5 Stunden zudosiert. Das Pfropfcopolymerisat aus ISL2, I1K2 und I1PA2 hatte einen mittleren Teilchendurchmesser (d₅₀) von 450 nm. Der Feststoffgehalt der Emulsion betrug 38,2%.

### Herstellung der Pfropfauflage (I2PA1)

5.000 g der Emulsion des Pfropfcopolymerisats aus ISL1, I1K1 und I1PA1 wurden mit 2.400 g Wasser verdünnt und 5 g des Na-Salzes und 3,5 g KPDS zugegeben. Bei 65°C wurde ein Gemisch aus 675 g Styrol und 225 g AN innerhalb von 2 Stunden zugetropft und weitere 2 Stunden bei 65°C gerührt. Das Pfropfcopolymerisat aus ISL1, I1K1, I1PA1 und I2PA1 hatte einen mittleren Teilchendurchmesser (d₅₀) von 535 nm. Der Feststoffgehalt der Emulsion betrug 39,3%.

### Herstellung der Pfropfauflage (I2PA2) zum Vergleich

Die dritte Pfropfauflage I2PA2 wurde auf das Pfropfcopolymerisat bestehend aus ISL2, I1K2 und I1PA2 aufgebracht und entsprechend E2PA1 hergestellt. Das Pfropfcopolymerisat aus ISL2, I1K2, I1PA2 und I2PA2 hatte einen mittleren Teilchendurchmesser (d₅₀) von 530 nm. Der Feststoffgehalt der Emulsion betrug 39,5%.

### Herstellung der Pfropfcopolymerisate II1 und II2

Die Herstellung der Segmente der Pfropfcopolymere II1 und II2 ergibt sich aus Tabelle 1.

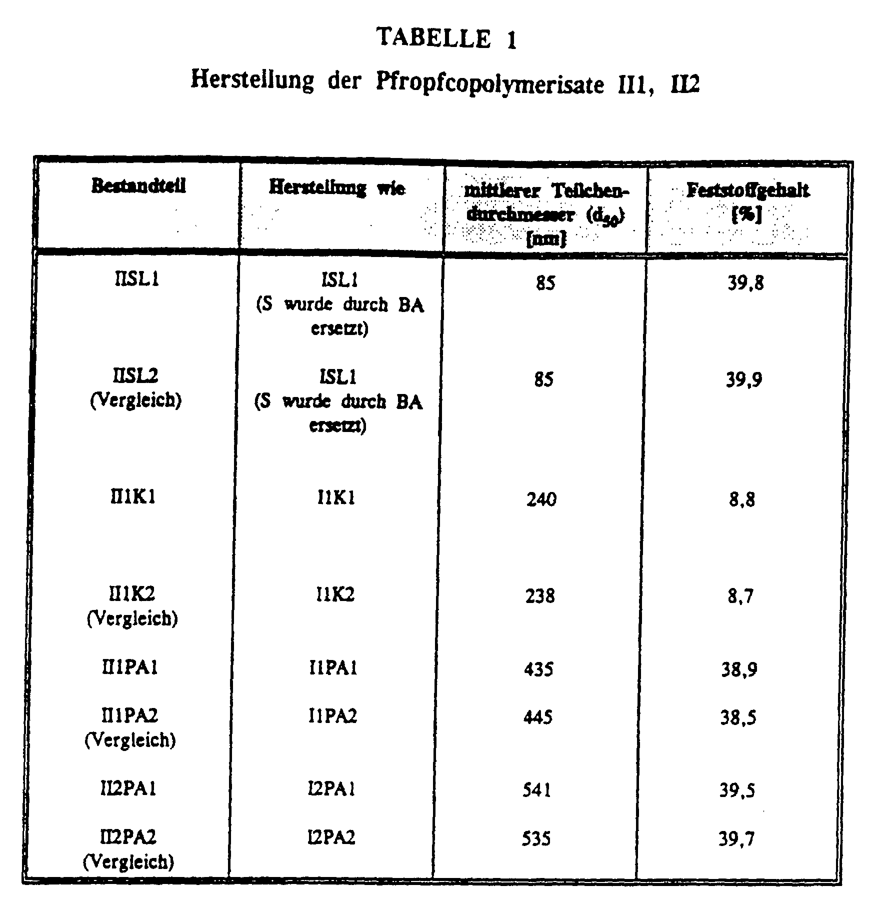

### Abmischungsversuche

Pfropfcopolymerisat I1 (erfindungsgemäß) besteht aus:
   ISL1, I1K1, I1PA1 und I2PA1
Pfropfcopolymerisat I2 (Vergleich) besteht aus:
   ISL2, I1K2, I1PA2 und I2PA2
Pfropfcopolymerisat II1 (erfindungsgemäß) besteht aus:
   IISL1, II1K1, II1PA1 und II2PA1
Pfropfcopolymerisat II2 (Vergleich) besteht aus:
   IISL2, II1K2, II1PA2 und II2PA2.

Zur Herstellung der Abmischungen wurde als Komponente III ein Styrol/ Acrylnitril-Copolymerisat mit einem Acrylnitril-Gehalt von 34% und einer Viskositätszahl von 78 ml/g (die Viskositätszahlen wurden an einer 0,5 %igen Lösung in DMF bei 23°C bestimmt) verwendet. Die gefällten und getrockneten Pfropfcopolymerisate I1, I2, II1 und II2 wurden auf einem Extruder mit der Komponente II bei 260°C abgemischt. Aus diesem Gemisch wurden Formteile hergestellt, an denen die Einfärbbarkeit ΔE (Farbdifferenzmessung nach DIN 6174 über weißem und schwarzem Untergrund) und der Glanz (nach DIN 67530 an bei einer Massetemperatur von 250°C gespritzten Rundscheiben unter einem Einstrahlwinkel von 45°) bestimmt wurde. Zur Bestimmung der Kerbschlagzähigkeit nach DIN 53453 wurden Normkleinstäbe gespritzt. Die Ergebnisse sind in Tabelle 2 angegeben.

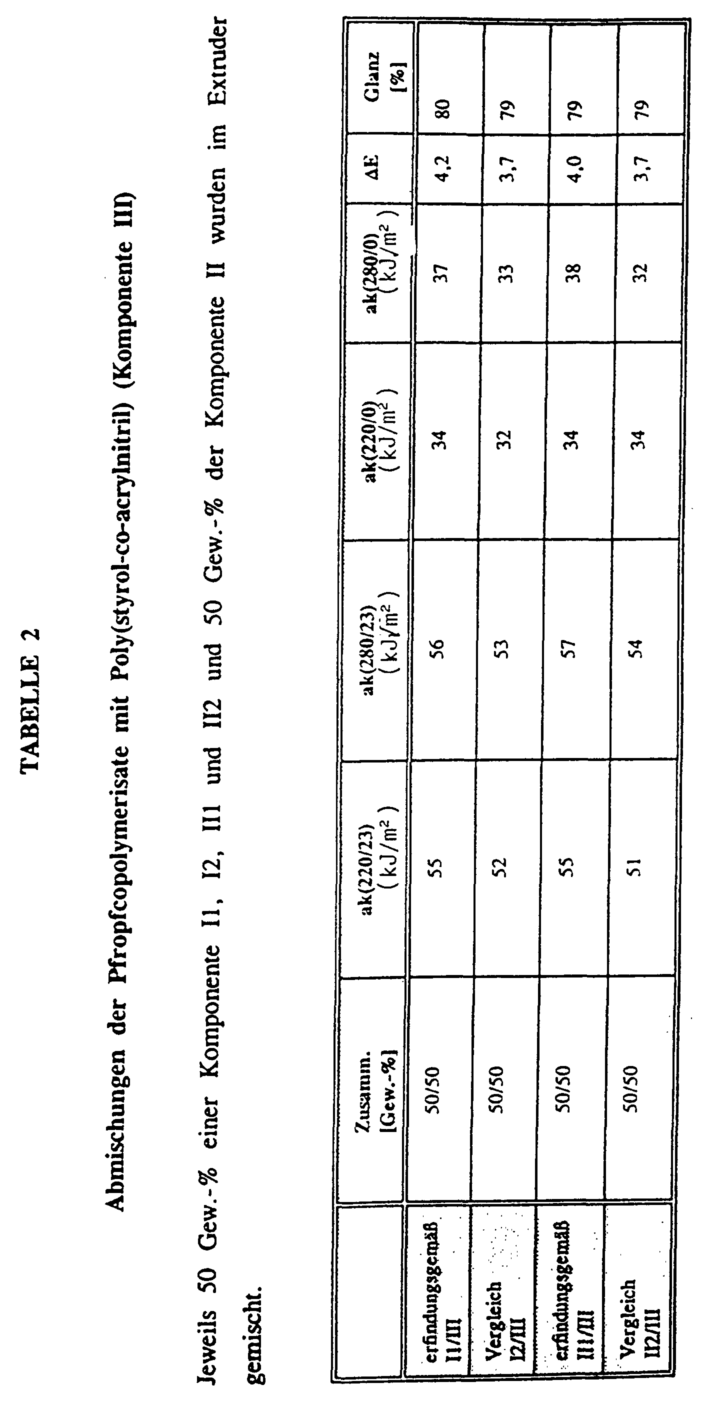

## Patentansprüche

1. Hartsegment H1 mit einer Glastemperatur von mindestens 10°C, enthaltend polymerisiert mindestens ein vinylaromatisches Monomer als Monomer oder als eines von zwei oder mehreren miteinander copolymerisierbaren Monomeren sowie mindestens einen Vernetzer mit zwei oder mehr funktionellen Gruppen unterschiedlicher Reaktivität und mindestens einen Vernetzer mit zwei oder mehr funktionellen Gruppen gleicher Reaktivität, wobei die Konzentration mindestens eines Vernetzers im Hartsegment variiert und bei der Herstellung die zudosierte Menge mindestens eines Vernetzers mit fünktionellen Gruppen unterschiedlicher Reaktivität über den Dosierzeitraum zunimmt.

2. Hartsegment H1 nach Anspruch 1, **gekennzeichnet durch** eines oder mehrere der folgenden Merkmale:
a) daß die Konzentration von mindestens einem Vernetzer mit zwei oder mehr funktionellen Gruppen unterschiedlicher Reaktivität, vorzugsweise Dihydrodicyclopentadienylacrylat, vom Inneren zum Äußeren des Hartsegments H1 variiert, jedoch vorzugsweise zunimmt;
b) eine Glastemperatur von mindestens 25 °C aufweist;
c) mindestens beinhaltet
H1.1) 50 bis 99,8 Gew.-% mindestens eines vinylaromatischen Monomeren,
H1.2) 0 bis 49,8 Gew.-% mindestens eines mit dem Monomeren H1.1 copolymerisierbaren Monomeren,
H1.3) 0,1 bis 25 Gew.-% einer Vernetzerkomponente aus
α) 0,1 bis 100 Gew-% Dihydrodicyclopentadienylacrylat
β) 0 bis 99,9 Gew.-% mindestens eines weiteren Vernetzers mit zwei oder mehr funktionellen Gruppen unterschiedlicher Reaktivität,
wobei die Summe der Gewichtsprozente aus α und β 100 ergibt, und
H1.4) 0,1 bis 25 Gew.-% mindestens eines Vernetzers mit zwei oder mehr funktionellen Gruppen gleicher Reaktivität, wobei die Summe der Gewichtsprozente von H1.1 bis H1.4 100 ergibt.

3. Verfahren zur Herstellung eines Hartsegments H1 nach Anspruch 1 oder 2, **dadurch gekennzeichnet, daß** die Variation der Konzentration mindestens eines Vernetzers durch Zudosierung des mindestens einen Vernetzers erfolgt.

4. Verfahren nach Anspruch 3, **dadurch gekennzeichnet, daß** die Variation, vorzugsweise Zunahme, der Konzentration mindestens eines Vernetzers mit zwei oder mehr funktionellen Gruppen unterschiedlicher Reaktivität, vorzugsweise Dihydrodicyclopentadienylacrylat, durch Zudosierung des mindestens einen Vernetzers erfolgt.

5. Verfahren nach einem der Ansprüche 3 oder 4, **dadurch gekennzeichnet, daß** dieses als Emulsionspolymerisation in einer wäßrigen Phase in Gegenwart eines oder mehrerer Emulgatoren und Initiatoren bei einer Temperatur von 20 bis 90 °C erfolgt.

6. Verwendung eines Hartsegments H1 nach einem der Ansprüche 1 bis 4 für Pfropfcopolymerisate.

7. Pfropfcopolymerisat P1, in beliebiger Reihenfolge enthaltend
mindestens ein Weichsegment mit einer Glastemperatur von höchstens 10°C, das mindestens ein Acrylat als Monomer oder als eines von zwei oder mehr miteinander copolymerisierbaren Monomeren und mindestens einen Vernetzer polymerisiert beinhaltet, und
mindestens ein Hartsegment H1 nach einem der Ansprüche 1 bis 4.

8. Pfropfcopolymerisat P1' nach Anspruch 7, **dadurch gekennzeichnet, daß** dieses das Weichsegment als Pfropfgrundlage P1'.1 und das Hartsegment als Pfropfauflage P1'.2 beinhaltet.

9. Pfropfcopolymerisat P1" nach Anspruch 7, **dadurch gekennzeichnet, daß** dieses das Hartsegment als Pfropfgrundlage P1".1 und das Weichsegment als Pfropfauflage P1".2 beinhaltet.

10. Pfropfcopolymerisat P2, mindestens enthaltend Pfropfcopolymerisat nach einem der Ansprüche 7 bis 9 und eine weitere Pfropfauflage (P2.3) aus einem Weichsegment mit einer Glastemperatur von höchstens 10°C, das mindesten ein Acrylat als Monomer oder als eines von zwei oder mehr miteinander copolymerisierbaren Monomeren und mindestens einen Vernetzer beinhaltet.

11. Pfropfcopolymerisate nach einem der Ansprüche 7 bis 10, enthaltend ein weiteres mindestens aus einem vinylaromatischen Monomeren bestehendes Segment.

12. Verfahren zur Herstellung eines Pfropfcopolymerisats nach einem der Ansprüche 7 bis 11 als Emulsionspolymerisation in einer wäßrigen Phase, **dadurch gekennzeichnet, daß** die Variation der Konzentration mindestens eines Vernetzers durch Zudosierung des mindestens einen Vernetzers erfolgt.

13. Verwendung mindestens eines der Pfropfcopolymerisate nach einem der Ansprüche 7 bis 11 für thermoplastische Massen.

14. Thermoplastische Massen (T1), mindestens enthaltend
T1.i) 0,1 bis 95 Gew.-% mindestens eines der Pfropcopolymerisate P1 gemäß Anspruch 7 und P2 gemäß Anspruch 10,
T1.ii) 0 bis 94,9 Gew.-% mindestens eines von T1.i verschiedenen Propfcopolymerisats und/oder deren Mischung,
T1.iii) 5 bis 99,9 Gew.-% mindestens eines Copolymerisats aus
T1.iii.1) 50 bis 100 Gew.-% mindestens eines vinylaromatischen Monomeren, C₁- bis C₁₈-Alkylacrylats, C₁- bis C₁₈-Acrylmethacrylats oder deren Mischungen, und
T1.iii.2) 0 bis 50 Gew.-% Acrylnitril, Methacrylnitril, Maleinsäureanhydrid, n-substituierte Maleimide oder deren Mischungen,
wobei die Summe der Gewichtsprozente von T1.iii.1 und T1.iii.2 100 ergibt,
T1.iv) 0 bis 90 Gew.-% mindestens eines Polycarbonats und
T1.v) 0 bis 50 Gew.-% Zusatzstoffe,
wobei die Summe der Gewichtsprozente von T1.i bis T1.v 100 ergibt.

15. Formkörper. Folien, Fasern oder Beschichtungen, enthaltend mindestens eines der Pfropfcopolymerisate gemäß einem der Ansprüche 7 bis 11 und/oder thermoplastische Massen T1 gemäß Anspruch 14.

16. Verwendung eines der Pfropfcopolymerisate gemäß einem der Ansprüche 9 bis 13 und/oder thermoplastischen Massen T1 gemäß Anspruch 14 für Formkörper, Folien, Fasern oder Beschichtungen.

## Claims

1. A hard segment H1 having a glass transition temperature of at least 10°C, containing, as polymerized units, at least one vinylaromatic monomer as the monomer or as one of two or more monomers copolymerizable with one another and at least one crosslinker having two or more functional groups of different reactivity and at least one crosslinker having two or more functional groups of the same reactivity, the concentration of at least one crosslinker in the hard segment varying and, in the preparation, the metered amount of at least one crosslinker having functional groups of different reactivity increasing over the metering period.

2. A hard segment H1 as claimed in claim 1, which comprises one or more of the following features:
a) that the concentration of at least one crosslinker having two or more functional groups of different reactivity, preferably dihydrodicyclopentadienyl acrylate, varies, but preferably increases, from the inside to the outside of the hard segment H1;
b) has a glass transition temperature of at least 25°C;
c) contains at least
H1.1) from 50 to 99.8% by weight of at least one vinylaromatic monomer,
H1.2) from 0 to 49.8% by weight of at least one monomer copolymerizable with monomer H1.1,
H1.3) from 0.1 to 25% by weight of a crosslinker component comprising
α) from 0.1 to 100% by weight of dihydrodicyclopentadienyl acrylate and
β) from 0 to 99.9% by weight of at least one further crosslinker having two or more functional groups of different reactivity,
the sum of the percentages by weight of α and β being 100, and
H1.4) from 0.1 to 25% by weight of at least one crosslinker having two or more functional groups of the same reactivity, the sum of the percentages by weight of H1.1 to H1.4 being 100.

3. A process for the preparation of a hard segment H1 as claimed in claim 1 or 2, wherein the variation in the concentration of at least one crosslinker is effected by metering in the one or more crosslinkers.

4. A process as claimed in claim 3, wherein the variation, preferably increase, in the concentration of at least one crosslinker having two or more functional groups of different reactivity, preferably a dihydrodicyclopentadienyl acrylate, is effected by metering in the at least one crosslinker.

5. A process as claimed in either of claims 3 or 4, which is carried out as an emulsion polymerization in an aqueous phase in the presence of one or more emulsifiers and initiators at from 20 to 90°C.

6. Use of a hard segment H1 as claimed in any of claims 1 to 4 for graft copolymers.

7. A graft copolymer P1 containing, in any desired sequence,
at least one soft segment having a glass transition temperature of not more than 10°C, which contains at least one acrylate as the monomer or as one of two or more monomers copolymerizable with one another and at least one crosslinker as polymerized units, and
at least one hard segment H1 as claimed in any of claims 1 to 4.

8. A graft copolymer P1' as claimed in claim 7, which contains the soft segment as grafting base P1'.1 and the hard segment as graft layer P1'.2.

9. A graft copolymer P1'' as claimed in claim 7, which contains a hard segment as grafting base P1''.1 and the soft segment as graft layer P1''.2.

10. A graft copolymer P2, at least containing a graft copolymer as claimed in any of claims 7 to 9 and a further graft layer (P2.3) comprising a soft segment having a glass transition temperature of not more than 10°C, which contains at least one acrylate as the monomer or as one of two or more monomers copolymerizable with one another and at least one crosslinker.

11. A graft copolymer as claimed in any of claims 7 to 10, containing a further segment at least comprising a vinylaromatic monomer.

12. A process for the preparation of a graft copolymer as claimed in any of claims 7 to 11 by emulsion polymerization in an aqueous phase, wherein the variation in the concentration of at least one crosslinker is effected by metering in the one or more crosslinkers.

13. Use of at least one of the graft copolymers as claimed in any of claims 7 to 11 for thermoplastic materials.

14. A thermoplastic material (T1), at least containing
T1.i) from 0.1 to 95% by weight of at least one of the graft copolymers P1 as claimed in claim 7 and P2 as claimed in claim 10,
T1.ii) from 0 to 94.9% by weight of at least one graft copolymer differing from T1.i and/or a mixture thereof,
T1.iii) from 5 to 99.9% by weight of at least one copolymer of
T1.iii.1) from 50 to 100% by weight of at least one vinylaromatic monomer, C₁-C₁₈-alkyl acrylate, C₁-C₁₈-alkyl methacrylate or mixture thereof, and
T1.iii.2) from 0 to 50% by weight of acrylonitrile, methacrylonitrile, maleic anhydride, N-substituted maleimides or a mixture thereof,
the sum of the percentages by weight of T1.iii.1 and T1.iii.2 being 100,
T1.iv) from 0 to 90% by weight of at least one polycarbonate and
T1.v) from 0 to 50% by weight of additives,
the sum of T1.i to T1.iv being 100.

15. A molding, film, fiber or coating, containing at least one of the graft copolymers as claimed in any of claims 7 to 11 and/or thermoplastic materials T1 as claimed in claim 14.

16. Use of one of the graft copolymers as claimed in any of claims 9 to 13 and/or thermoplastic materials T1 as claimed in claim 14 for moldings, films, fibers or coatings.

## Revendications

1. Segment dur H1 d'une température de transition vitreuse d'au moins 10°C, contenant, à l'état polymérisé, au moins un monomère vinylaromatique comme monomère ou comme l'un de deux ou plusieurs monomères copolymérisables entre eux, ainsi qu'au moins un réticulant comportant deux ou plus de deux groupes fonctionnels de réactivités différentes et au moins un réticulant comportant deux ou plus de deux groupes fonctionnels de même réactivité, où la concentration d'au moins un réticulant dans le segment dur varie, et lors de la préparation, la quantité ajoutée d'au moins un réticulant à groupes fonctionnels de réactivités différentes augmente pendant la durée de l'addition.

2. Segment dur H1 selon la revendication 1, **caractérisé par** une ou plusieurs des caractéristiques suivantes:
a) la concentration d'au moins un réticulant comportant deux ou plus de deux groupes fonctionnels de réactivités différentes, de préférence de l'acrylate de dihydrodicyclopentadiényle, varie de l'intérieur vers l'extérieur du segment dur H1, mais augmente toutefois de préférence;
b) la température de transition vitreuse est d'au moins 25°C;
c) le segment contient au moins:
H1.1) 50 à 99,8% en poids d'au moins un monomère vinylaromatique,
H1.2) 0 à 49,8% en poids d'au moins un monomère copolymérisable avec le monomère H1.1,
H1.3) 0,1 à 25% en poids d'un composant réticulant composé de
α) 0,1 à 100% en poids d'acrylate de dihydrodicyclopentadiényle
β) 0 à 99,9% en poids d'au moins un autre réticulant comportant deux ou plus de deux groupes fonctionnels de réactivités différentes,
la somme des pourcentages en poids de α et β totalisant 100, et
H1.4) 0,1 à 25% en poids d'au moins un réticulant comportant deux ou plus de deux groupes fonctionnels de même réactivité, la somme des pourcentages en poids de H1.1 à H1.4 totalisant 100.

3. Procédé de préparation d'un segment dur selon la revendication 1 ou 2, **caractérisé en ce que** la variation de concentration d'au moins un réticulant se fait par addition dosée du au moins un réticulant.

4. Procédé selon la revendication 3, **caractérisé en ce que** la variation, de préférence une augmentation, de la concentration d'au moins un réticulant comportant deux ou plus de deux groupes fonctionnels de réactivités différentes, de préférence de l'acrylate de dihydrodicyclopentadiényle, se fait par addition dosée du au moins un réticulant.

5. Procédé selon l'une des revendications 3 ou 4, **caractérisé en ce qu'**elle est entreprise en tant que polymérisation en émulsion dans une phase aqueuse, en présence d'un ou plusieurs émulsifiants et initiateurs et à une température de 20 à 90°C.

6. Utilisation d'un segment dur H1 selon l'une des revendications 1 à 4 pour des copolymères de greffage.

7. Copolymère de greffage P1 contenant, en ordre quelconque:
au moins un segment mou d'une température de transition vitreuse d'un maximum de 10°C, contenant, à l'état polymérisé, au moins un acrylate en tant que monomère ou en tant que l'un de deux ou plus de deux monomères copolymérisables entre eux et au moins un réticulant, et
au moins un segment dur H1 selon l'une des revendications 1 à 4.

8. Copolymère de greffage P1' selon la revendication 7, **caractérisé en ce qu'**il contient le segment mou comme base de greffage P1'.1 et le segment dur comme enveloppe de greffage P1'.2.

9. Copolymère de greffage P1" selon la revendication 7, **caractérisé en ce qu'**il contient le segment dur comme base de greffage P1".1 et le segment mou comme enveloppe de greffage P1".2.

10. Copolymère de greffage P2 contenant au moins un copolymère de greffage selon l'une des revendications 7 à 9 et une autre enveloppe de greffage (P.2.3) constituée d'un segment mou d'une température de transition vitreuse d'un maximum de 10°C, contenant au moins un acrylate en tant que monomère ou en tant que l'un de deux ou plus de deux monomères copolymérisables entre eux, et au moins un réticulant.

11. Copolymère de greffage selon l'une des revendications 7 à 10, contenant un autre segment constitué d'au moins un monomère vinylaromatique.

12. Procédé de préparation d'un copolymère de greffage selon l'une des revendications 7 à 11 par polymérisation en émulsion dans une phase aqueuse, **caractérisé en ce que** la variation de la concentration d'au moins un réticulant se fait par addition dosée du au moins un réticulant.

13. Utilisation d'au moins un des copolymères de greffage selon l'une des revendications 7 à 11 dans des masses thermoplastiques.

14. Masses thermoplastiques (T1) contenant au moins
T1.i) 0,1 à 95% en poids d'au moins l'un des copolymères de greffage P1 selon la revendication 7 et P2 selon la revendication 10,
T1.ii) 0 à 94,9% en poids d'au moins un copolymère de greffage différent de T1.i, ou leur mélange,
T1.iii) 5 à 99,9% en poids d'au moins un copolymère constitué de
T1.iii.1) 50 à 100% en poids d'au moins un monomère vinylaromatique, d'acrylate d'alkyle en C₁-C₁₈, de méthacrylate d'alkyle en C₁-C₁₈, ou leurs mélanges,
T1.iii.2) 0 à 50% en poids d'acrylonitrile, de méthacrylonitrile, d'anhydride maléique, de maléimides n-substitués, ou leurs mélanges,
la somme des pourcentages en poids de T1.iii.1 et T1.iii.2 totalisant 100,
T1.iv) 0 à 90% en poids d'au moins un polycarbonate et
T1.v) 0 à 50% en poids d'additifs,
la somme des pourcentages en poids de T1.i à T1.v totalisant 100.

15. Corps façonnés, fibres ou revêtements contenant au moins l'un des copolymères de greffage selon l'une des revendications 7 à 11 et/ou des masses thermoplastiques T1 selon la revendication 14.

16. Utilisation de l'un des copolymères de greffage selon l'une des revendications 9 à 13 et/ou de masses thermoplastiques T1 selon la revendication 14 pour des corps façonnés, des fibres ou des revêtements.
